# EUROPEAN PATENT SPECIFICATION

(11) **EP 4 447 234 B1**
(45) Date of publication and mention of the grant of the patent: **04.03.2026**
(21) Application number: 23760257.8
(22) Date of filing: 19.01.2023
(51) Int. Cl.: H01R 13/58, H01R 13/629, H01R 12/70, H04M 1/02, H01R 24/50, H01R 43/26

(54) **ELECTRONIC DEVICE COMPRISING ELECTRICAL CONNECTION MEMBER**
ELEKTRONISCHE VORRICHTUNG MIT ELEKTRISCHES VERBINDUNGSELEMENT
DISPOSITIF ÉLECTRONIQUE COMPRENANT ÉLÉMENT DE CONNEXION ÉLECTRIQUE

(30) Priority: 28.02.2022 KR 20220026031; 28.03.2022 KR 20220037893
(43) Date of publication of application: 16.10.2024
(73) Proprietor: Samsung Electronics Co., Ltd., Suwon-si, Gyeonggi-do 16677 (KR)
(72) Inventor: KIM, Joosung, Suwon-si, Gyeonggi-do 16677 (KR); NA, Hyoseok, Suwon-si, Gyeonggi-do 16677 (KR); KU, Doil, Suwon-si, Gyeonggi-do 16677 (KR); KIM, Sanguk, Suwon-si, Gyeonggi-do 16677 (KR)
(74) Representative: HGF
(86) International application number: PCT/KR2023/000957
(87) International publication number: WO 2023/163382

(56) References cited:
- JP-A- 2007 294 357
- KR-A- 20190 103 814
- KR-A- 20210 108 741
- KR-B1- 100 525 630
- US-A- 6 034 876
- US-A1- 2013 171 876
- US-A1- 2018 212 363

## Description

### BACKGROUND

### 1. Field

The present disclosure relates to an electronic device including an electrical connection member.

### 2. Description of Related Art

An electronic device may include a configuration for electrically connecting individual electronic parts that are spaced apart from each other, to implement various functions. The spaced electronic parts may be electrically connected to each other by electrical connection members. The electronic device may transmit or receive signals (e.g., radio frequency (RF) signals) for communication (e.g., wireless communication) through the electrical connection members.

The electrical connection members may include cables of specific lengths, and heads installed at ends of the cables may physically contact receptacles disposed in electronic parts such that two electronic parts may be electrically connected to each other.

Lengths of the cables are formed to be larger than lengths of the receptacles, and thus the operator may couple the heads to the receptacles after arranging the heads on the receptacles by using tweezers or hands. When the coupling is progressed after the heads are arranged at wrong locations of the receptacles, defects (such as damage to the heads), damage and/or improper insertion of the receptacles may be caused.

US 6 034 876 A discloses an electronic device comprising a case, a printed circuit board disposed in the case, and an electrical connector mounted on the printed circuit board for connecting the printed circuit board with an external circuit.

US 2013/171876 A1 discloses a coaxial electrical connector having a connector mounting portion formed as a recess or a through hole in a printed wiring board. The connector is mounted such that its insulating housing is inserted into this connector mounting portion of the printed wiring board.

### SUMMARY

Provided are an electrical connection member that may improve assembly efficiency and prevent damage thereto, and an electronic device including the same.

Aspects of the invention are set forth in the appended claims.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a block diagram illustrating an electronic device in a network environment according to an embodiment;
FIG. 2A is a diagram of a front surface of a mobile electronic device according to an embodiment;
FIG. 2B is a diagram of a rear surface of an electronic device according to an embodiment;
FIG. 3 is a diagram of an electronic device according to an embodiment;
FIG. 4 is a diagram of an electronic device according to an embodiment ;
FIG. 5 is a diagram of an electrical connection member according to an embodiment ;
FIG. 6 is a diagram of the electrical connection member of FIG. 5 according to an embodiment;
FIGS. 7A and 7B are diagrams of various examples of method for coupling an outer shell of an electrical connection member and a boss structure according to an embodiment;

The head may protrude toward the printed circuit board, and the at least one boss structure may protrude toward the printed circuit board further than the head protrudes toward the printed circuit board.

The at least one boss structure may include at least one through-hole passing through the at least one boss structure along an axial direction of the cable, and the head includes an outer shell, and a partial area of the outer shell is provided in the at least one through-hole.

An outer peripheral surface of the partial area of the outer shell may include a screw thread, and the at least one through-hole may include a shape corresponding to the screw thread.

A stopper boss may be formed on an outer peripheral surface of the partial area of the outer shell, and a stopper recess may be coupled to the stopper boss is formed in the at least one boss structure.

The at least one boss structure may include a first boss structure provided in an area that does not overlap the cable, and a second boss structure provided in an area that overlaps the cable, the second boss structure including a through-hole into which the cable is provided.

The at least one boss structure may include a connection terminal contacting the mechanism.

The electronic device may include a third opening formed in the mechanism, and in a direction that crosses a depth direction of the second opening, and a fixing member protruding from the at least one boss structure and provided the third opening.

The electronic device may further include a plurality of electrical connection members including the electrical connection member, the at least one boss structure may include a plurality of boss structures, and one boss structure of the plurality of boss structures may be provided in each of the plurality of electrical connection members.

The at least one boss structure may include a plurality of boss structures, and the electronic device may include clamp members provided between the plurality of boss structures.

At least a partial area of the at least one boss structure may protrude in a direction that is inclined with respect to one surface of the printed circuit board.

According to an aspect of the disclosure, an electrical connection member coupled to a receptacle provided in a circuit board and configured to be separable from the receptacle may include a cable, a head connected to the cable, protruding toward the receptacle and toward the circuit board, the head being configured to be coupled to the receptacle, and a boss structure protruding from the head or the cable toward the circuit board further than the head protrudes toward the circuit board.

The boss structure may include at least one through-hole, and the head may include an outer shell, the outer shell comprising a partial area provided in the at least one through-hole.

The boss structure may include a connection terminal contacting a mechanism on which the circuit board is provided.

The boss structure may be provided in an opening formed in at least one of the circuit board and a mechanism on which the circuit board is seated.

The boss structure may be integral with at least one of the cable and the head, and the boss structure may be coupled to at least one of the cable and the head.

According to an aspect of the disclosure, a method off coupling a head and a receptacle may include arranging an electrical connection member on a printed circuit board, the electrical connection member including a boss structure, and the printed circuit board including an opening, arranging the head on the receptacle by inserting the boss structure of the electrical connection member into the opening of the printed circuit board, and coupling the head to the receptacle by inserting the head into the receptacle after the head and the receptacle are arranged, thereby fixing a location of the head.

### BRIEF DESCRIPTION OF DRAWINGS

The above and other aspects, features, and advantages of certain embodiments of the present disclosure will be more apparent from the following description taken in conjunction with the accompanying drawings, in which:

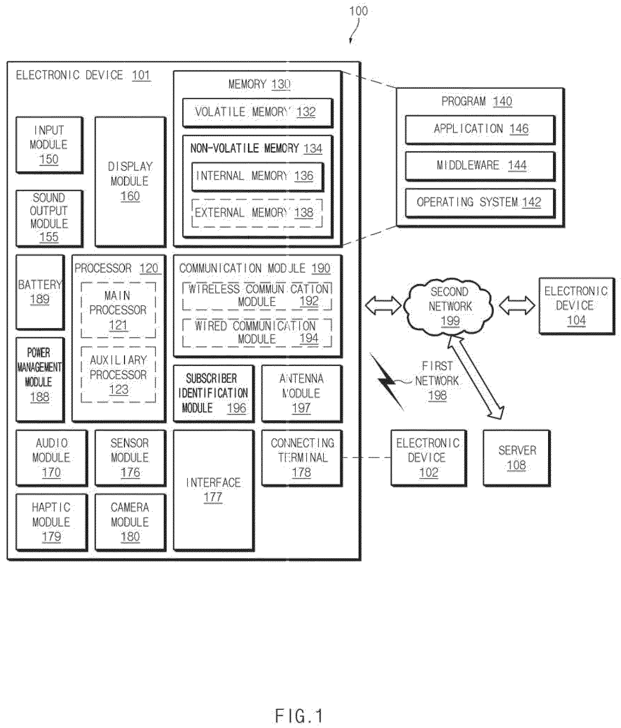

FIG. 1 is a block diagram illustrating an electronic device in a network environment according to an embodiment;

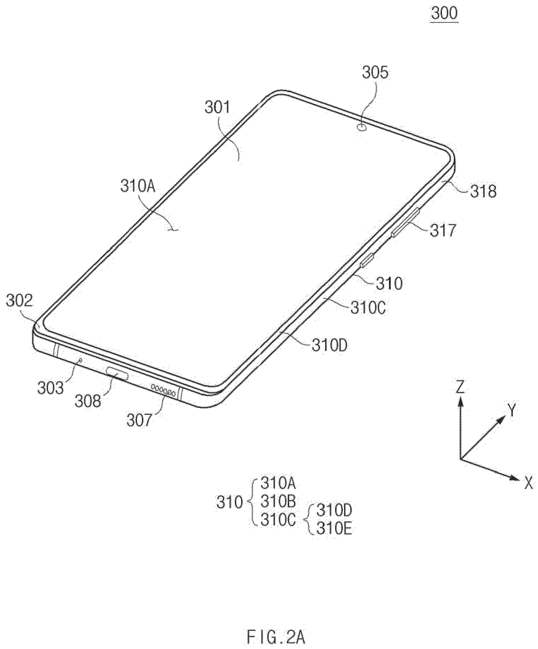

FIG. 2A is a diagram of a front surface of a mobile electronic device according to an embodiment;

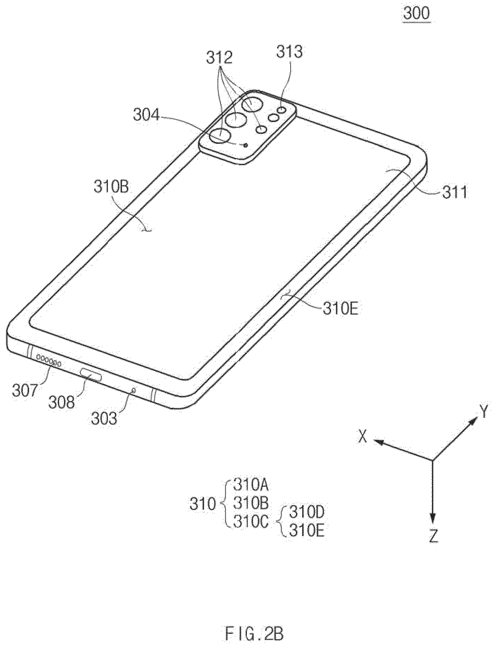

FIG. 2B is a diagram of a rear surface of an electronic device according to an embodiment;

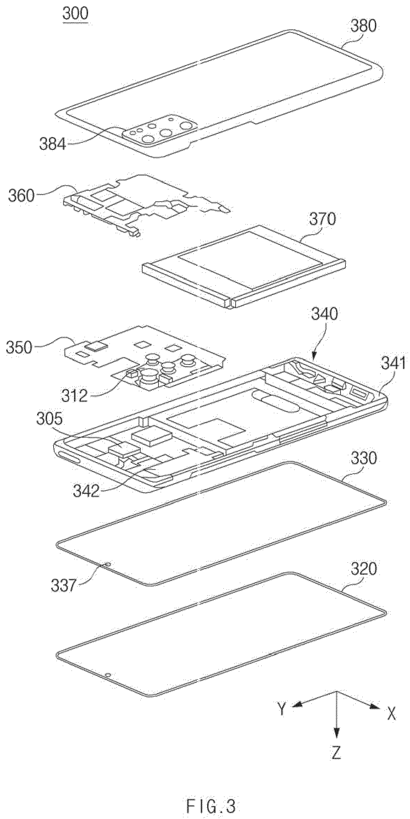

FIG. 3 is a diagram of an electronic device according to an embodiment;

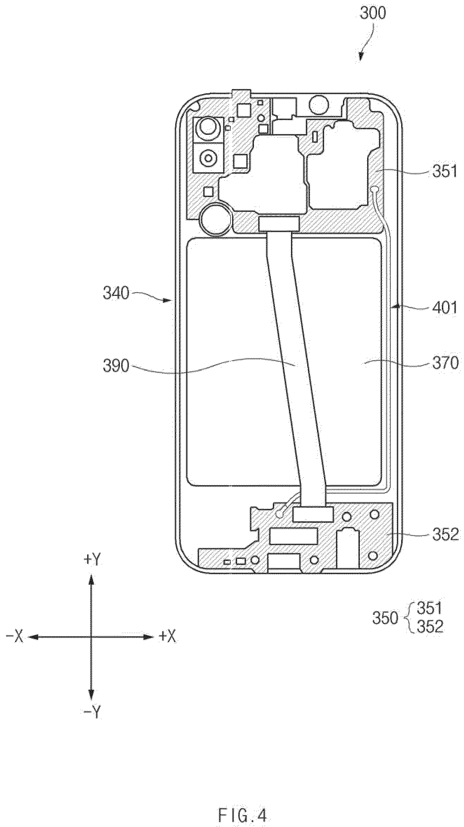

FIG. 4 is a diagram of an electronic device according to an embodiment ;

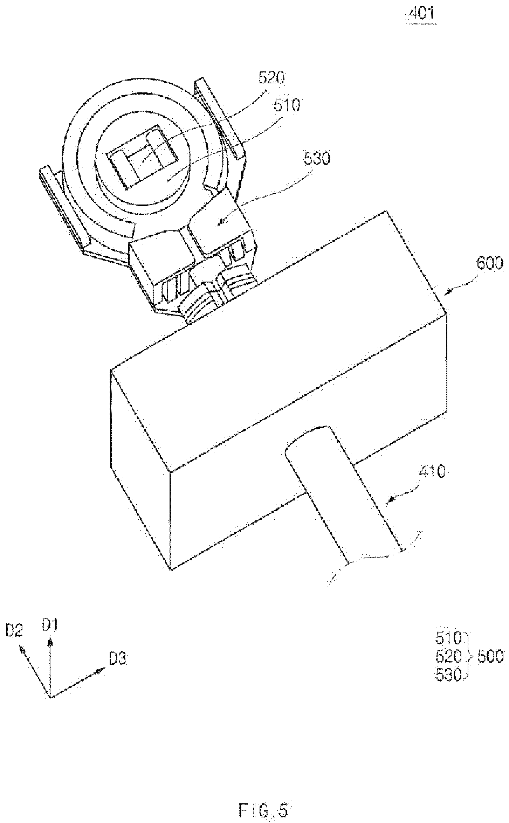

FIG. 5 is a diagram of an electrical connection member according to an embodiment ;

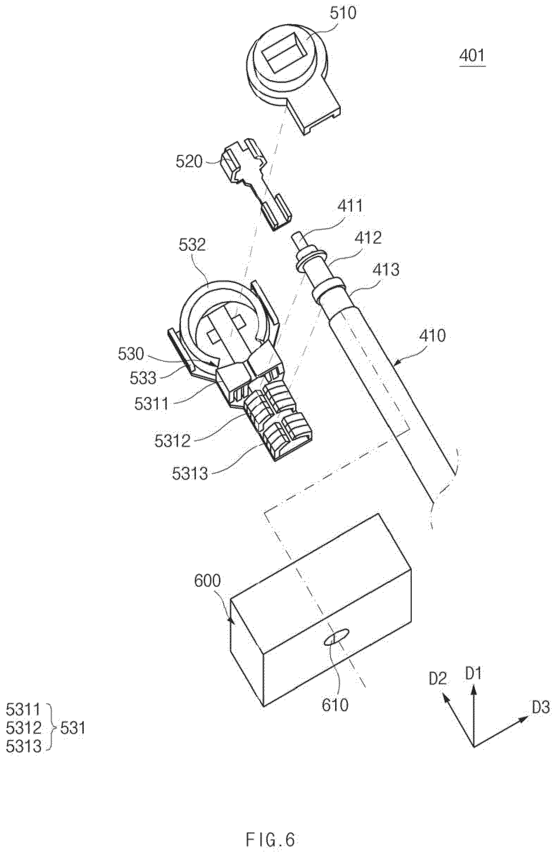

FIG. 6 is a diagram of the electrical connection member of FIG. 5 according to an embodiment;

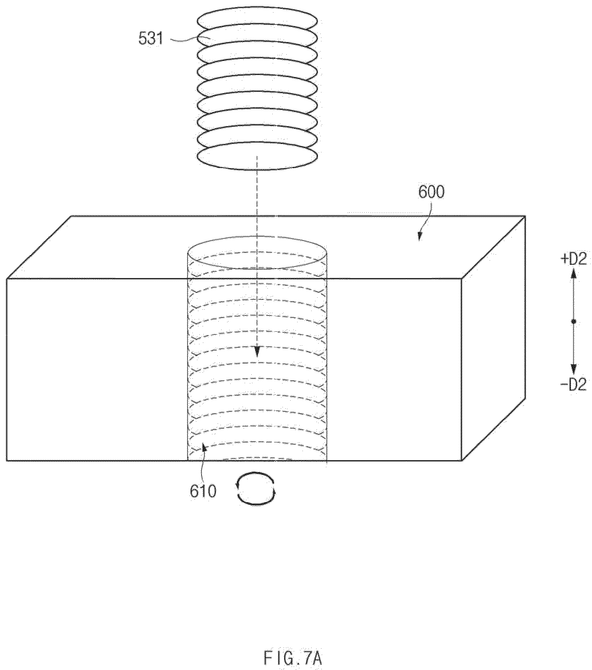

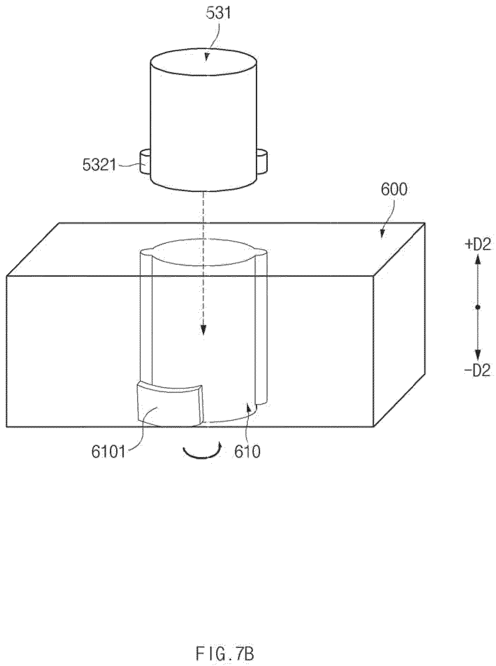

FIGS. 7A and 7B are diagrams of various examples of method for coupling an outer shell of an electrical connection member and a boss structure according to an embodiment;

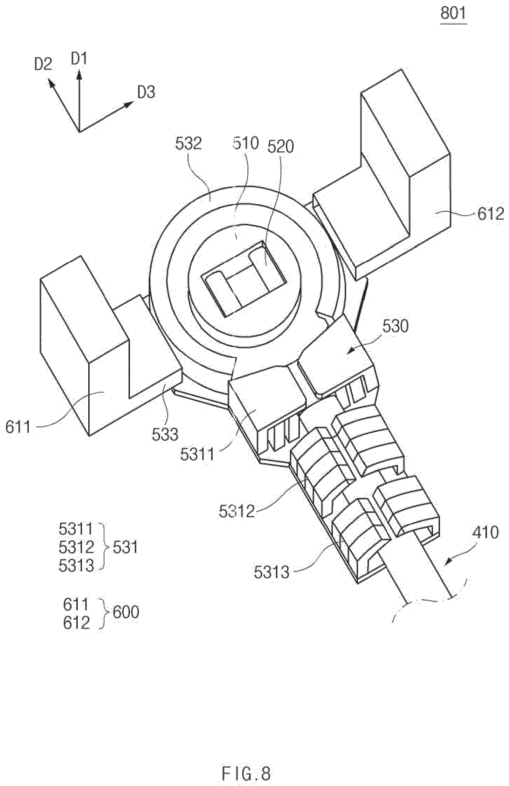

FIG. 8 are diagrams of an example of an electrical connection member according to an embodiment;

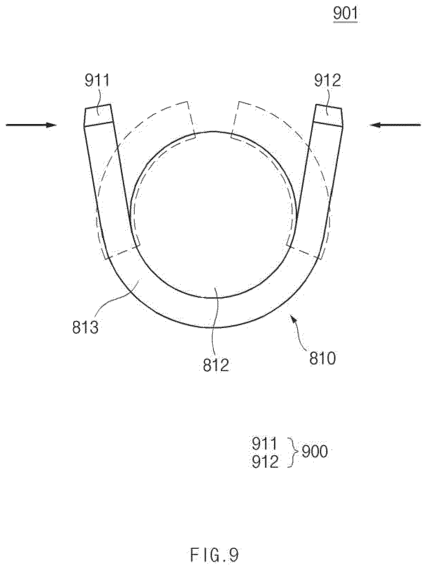

FIG. 9 is a cross-sectional view illustrating an example of an electrical connection member according to an embodiment;

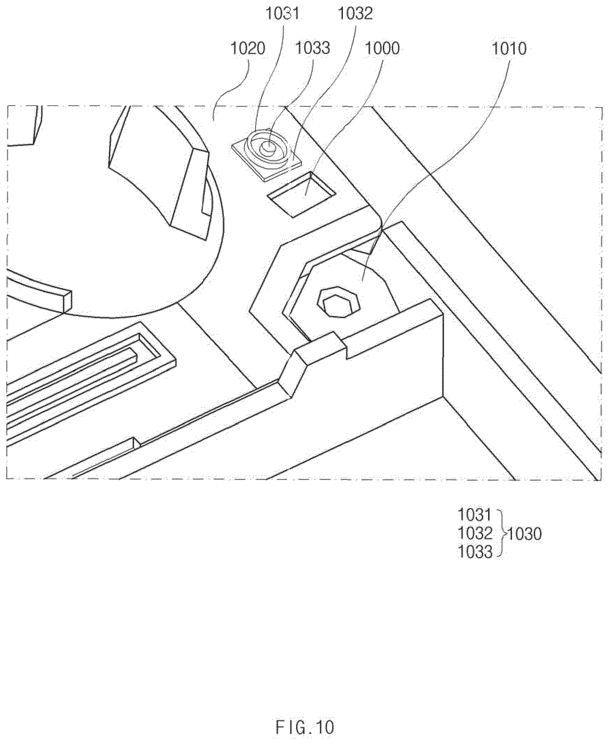

FIG. 10 is a diagram of an electronic device including an opening according to an embodiment;

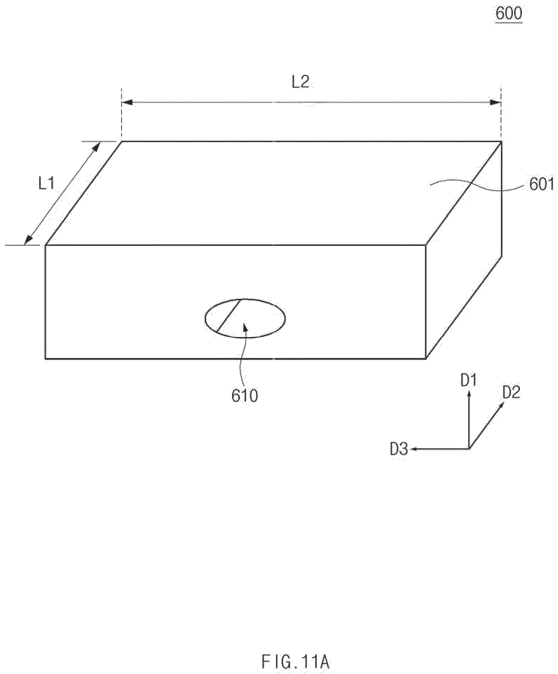

FIG. 11A is a diagram of a first example of a boss structure of an electrical connection member according to an embodiment;

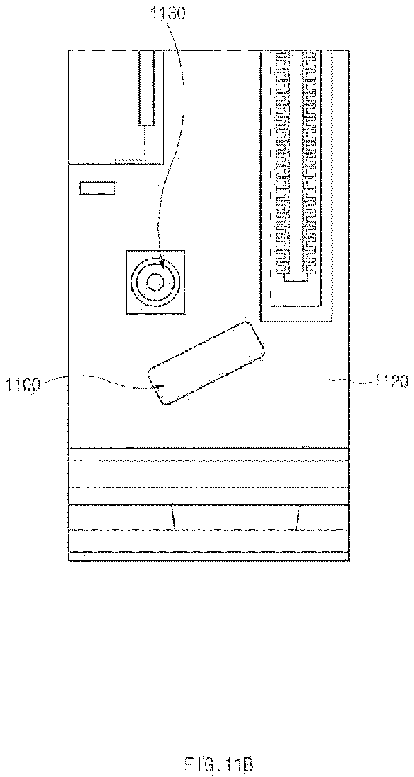

FIG. 11B is a diagram of an electronic device having an opening, into which the boss structure illustrated in FIG. 11A is inserted according to an embodiment;

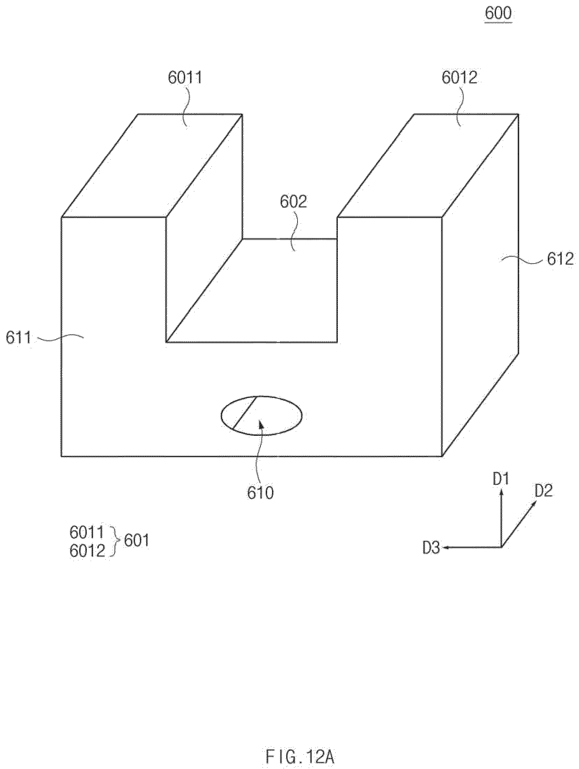

FIG. 12A is a diagram of a second example of a boss structure of an electrical connection member according to an embodiment;

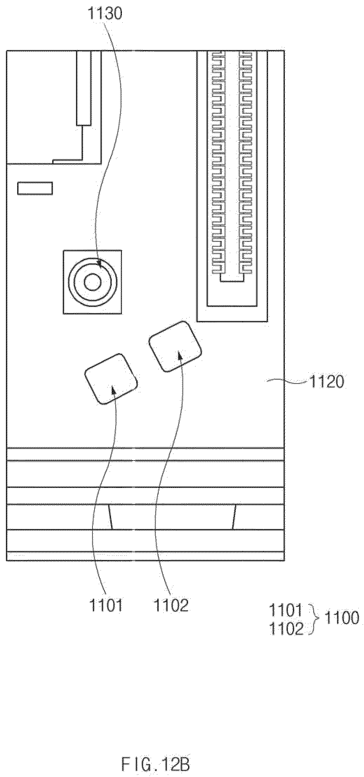

FIG. 12B is a diagram of an electronic device having an opening, into which the boss structure illustrated in FIG. 12A is inserted according to an embodiment;

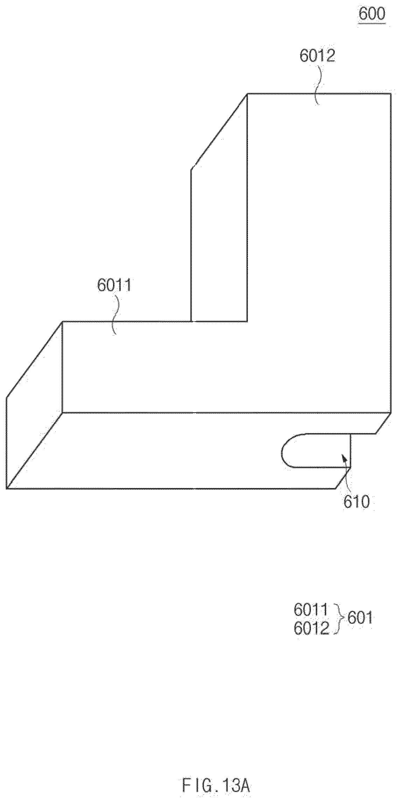

FIG. 13A is a diagram a third example of a boss structure of an electrical connection member according to an embodiment;

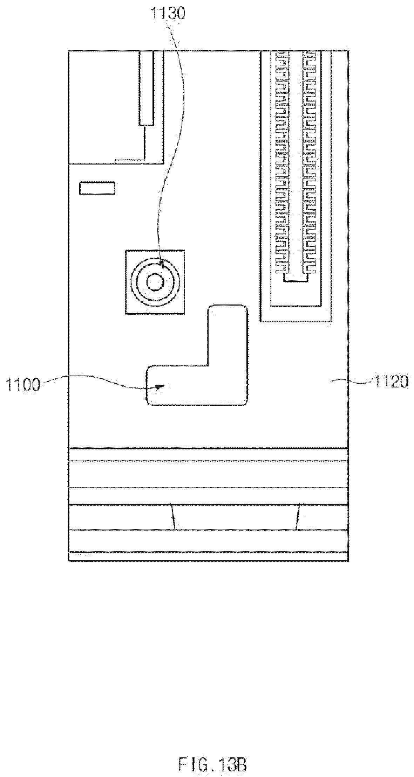

FIG. 13B is a diagram of an electronic device having an opening, into which the boss structure illustrated in FIG. 13A is inserted according to an embodiment;

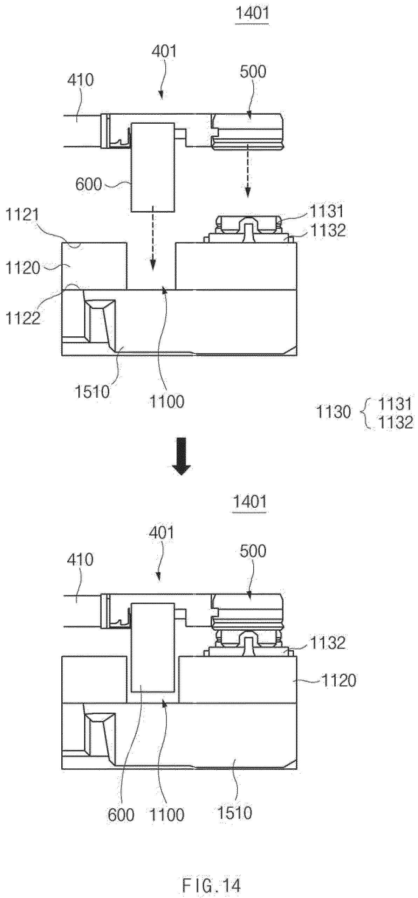

FIG. 14 is a diagram of an example of an electronic device including an electrical connection member inserted into an opening according to an embodiment;

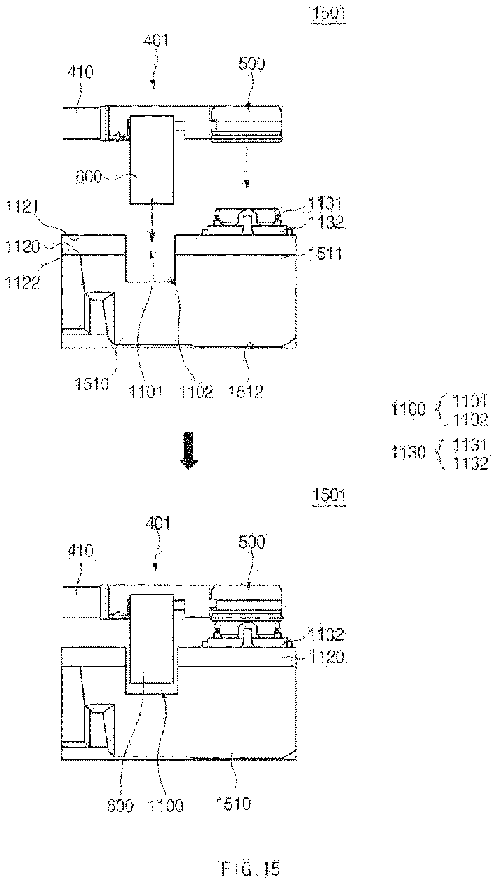

FIG. 15 is a diagram of an example of an electronic device including an electrical connection member inserted into an opening according to an embodiment;

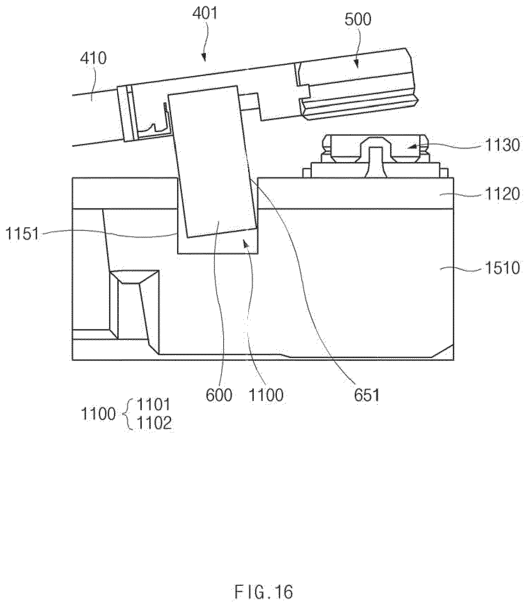

FIG. 16 is a diagram of a case, in which arrangement locations of a receptacle and a head of an electronic device are misaligned according to an embodiment;

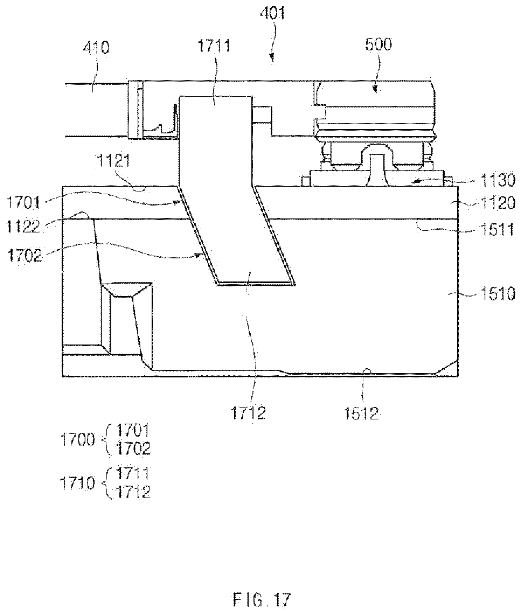

FIG. 17 is a diagram of example of an electronic device including an electrical connection member inserted into an opening according to an embodiment;

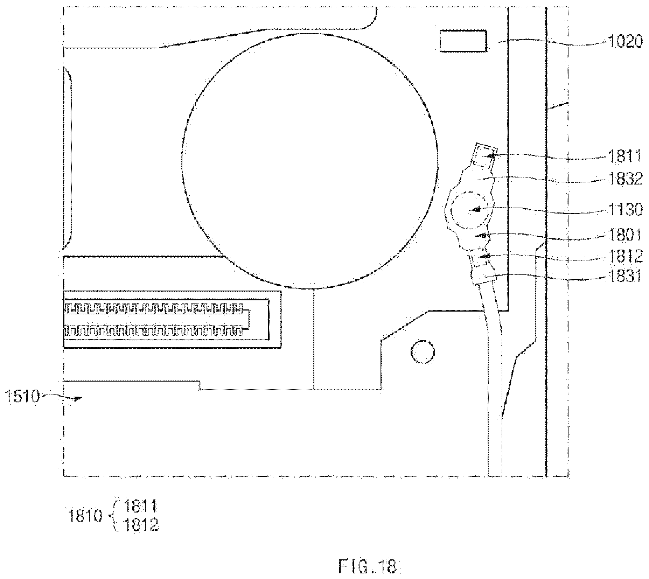

FIG. 18 is a diagram of an electronic device including a plurality of boss structures according to an embodiment;

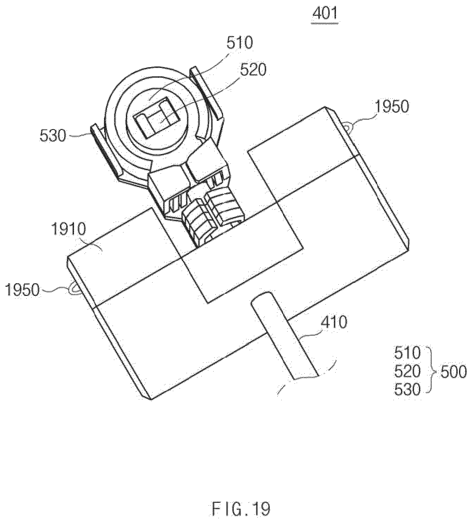

FIG. 19 is a diagram of an electronic device including a boss structure having a connection terminal according to an embodiment;

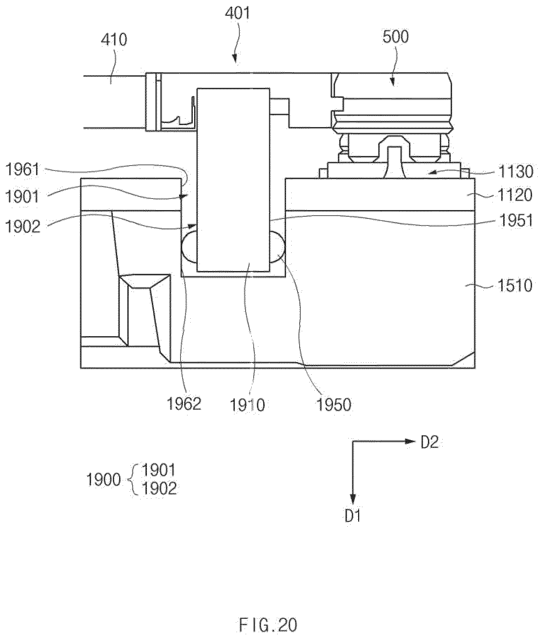

FIG. 20 is a cross-sectional view illustrating an electronic device illustrated in FIG. 19 according to an embodiment;

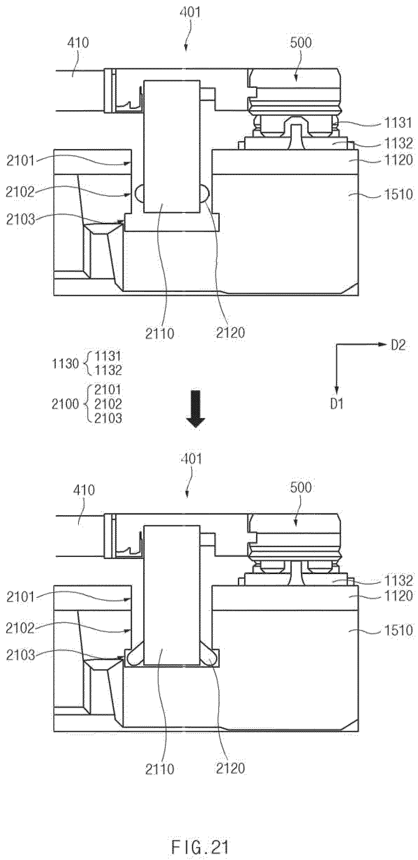

FIG. 21 is a diagram of an electronic device including a boss structure having a fixing member according to an embodiment;

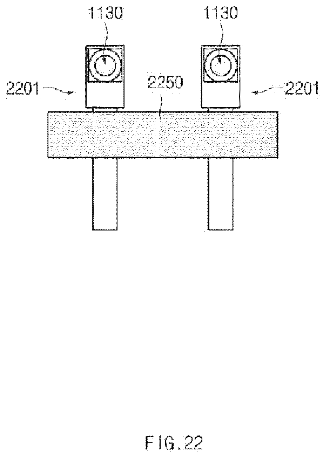

FIG. 22 is a diagram of an example of a disposition relationship of electrical connection members according to an embodiment;

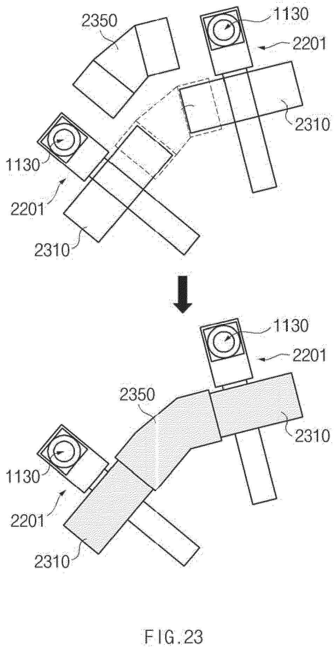

FIG. 23 is a diagram of an example of a disposition relationship of electrical connection members according to an embodiment; and

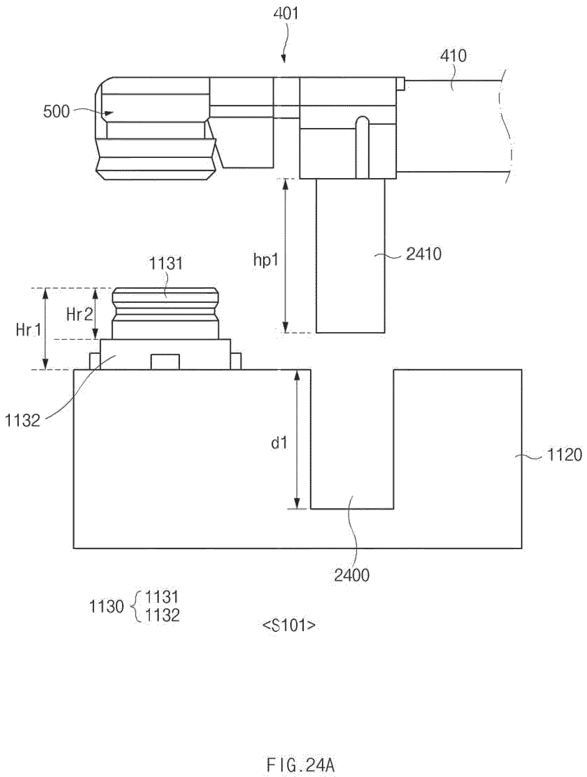

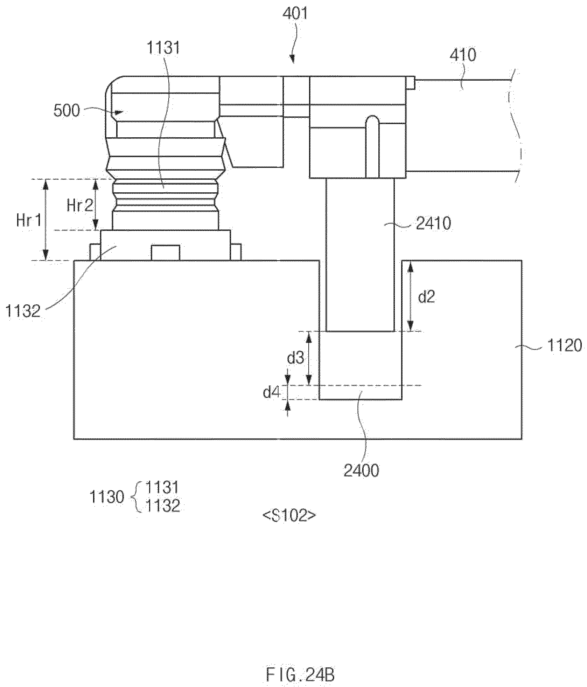

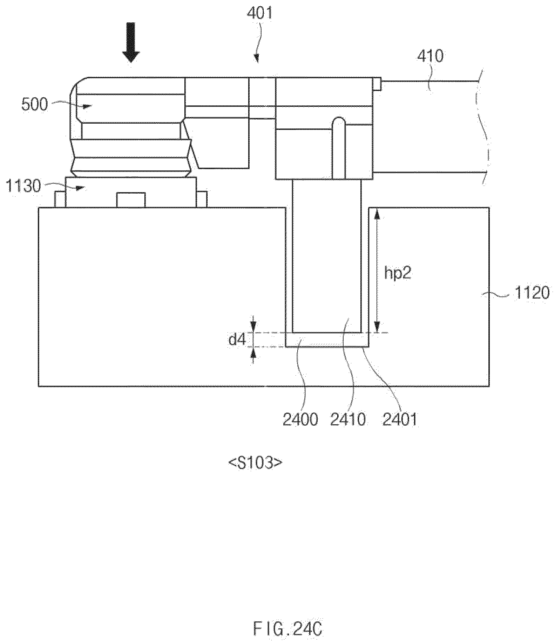

FIGS. 24A, 24B and 24C are diagrams of a process of coupling a head and a receptacle according to an embodiment.

With regard to description of drawings, the same or similar components may be marked by the same or similar reference numerals.

### DETAILED DESCRIPTION

Hereinafter, various embodiments of the disclosure are described with reference to the accompanying drawings. However, it is not intended to limit the disclosure to specific embodiments, and it should be understood that various modifications, equivalents, and/or alternatives of embodiments of the disclosure are included.

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display module 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display module 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5^{th} generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 2A is a diagram of a front surface of a mobile electronic device according to an embodiment. FIG. 2B is a diagram of a rear surface of an electronic device according to an embodiment.

Referring to FIGS. 2A and 2B, the electronic device 300 according to an embodiment (e.g., the electronic device 101 of FIG. 1) may include a housing 310 that includes a first surface (or, a front surface) 310A, a second surface (or, a rear surface) 310B, and a third surface (or, a side surface) 310C surrounding a space between the first surface 310A and the second surface 310B.

In an embodiment, the housing 310 may refer to a structure that forms some of the first surface 310A, the second surface 310B, and the third surface 310C.

In an embodiment, the first surface 310A may be formed by a front plate 302, at least a portion of which is substantially transparent (e.g., a glass plate including various coating layers, or a polymer plate). The second surface 310B may be formed by a back plate 311 that is substantially opaque. The back plate 311 may be formed of, for example, coated or colored glass, ceramic, a polymer, metal (e.g., aluminum, stainless steel (STS), or magnesium), or a combination of at least two of the aforementioned materials. The third surface 310C may be formed by a side bezel structure (or, a side member) 318 that is coupled with the front plate 302 and the back plate 311 and that includes metal and/or a polymer.

In an embodiment, the back plate 311 and the side bezel structure 318 may be integrally formed with each other and may include the same material (e.g., a metallic material such as aluminum).

In an embodiment, the front plate 302 may include two first regions 310D that curvedly and seamlessly extend from partial regions of the first surface 310A toward the back plate 311. The first regions 310D may be located at opposite long edges of the front plate 302.

In an embodiment, the back plate 311 may include two second regions 310E that curvedly and seamlessly extend from partial regions of the second surface 310B toward the front plate 302. The second regions 310E may be located at opposite long edges of the back plate 311.

In an embodiment, the front plate 302 (or, the back plate 311) may include only one of the first regions 310D (or, the second regions 310E). Furthermore, in an embodiment, the front plate 302 (or, the back plate 311) may not include a part of the first regions 310D (or, the second regions 310E).

In an embodiment, when viewed from a side of the electronic device 300, the side bezel structure 318 may have a first thickness (or, width) at sides (e.g., short sides) not including the first regions 310D or the second regions 310E and may have a second thickness at sides (e.g., long sides) including the first regions 310D or the second regions 310E, the second thickness being smaller than the first thickness.

In an embodiment, the electronic device 300 may include at least one of a display 301 (e.g., the display module 160 of FIG. 1), audio modules 303, 304, and 307 (e.g., the audio module 170 of FIG. 1), a sensor module (e.g., the sensor module 176 of FIG. 1), camera modules 305, 312, and 313 (e.g., the camera module 180 of FIG. 1), key input devices 317 (e.g., the input module 150 of FIG. 1), a light emitting element, or a connector hole 308 (e.g., the connecting terminal 178 of FIG. 1). In an embodiment, at least one component (e.g., the key input devices 317 or the light emitting element) among the aforementioned components may be omitted from the electronic device 300, or other component(s) may be additionally included in the electronic device 300.

In an embodiment, the display 301 may be visually exposed through most of the front plate 302. For example, at least a portion of the display 301 may be visually exposed through the front plate 302 that includes the first surface 310A and the first regions 310D of the third surface 310C. The display 301 may be disposed on a rear surface of the front plate 302.

In an embodiment, the periphery of the display 301 may be formed to be substantially the same as the shape of the adjacent outside edge of the front plate 302. In an embodiment, to expand the area by which the display 301 is visually exposed, the gap between the outside edge of the display 301 and the outside edge of the front plate 302 may be substantially constant.

In an embodiment, a surface of the housing 310 (or, the front plate 302) may include a screen display area that is formed as the display 301 is visually exposed. For example, the screen display area may include the first surface 310A and the first regions 310D of the side surface.

In an embodiment, the screen display area may include the first surface 310A and the first regions 310D, and may include a sensing region that is configured to obtain biometric information of a user. When the screen display area includes the sensing region, this may mean that at least a portion of the sensing region overlaps the screen display area. For example, the sensing region may refer to a region capable of displaying visual information by the display 301 like the other regions of the screen display area and additionally obtaining biometric information (e.g., a fingerprint) of the user.

In an embodiment, the screen display area (e.g., the first surface 310A and the first regions 310D) of the display 301 may include a region through which the first camera module 305 (e.g., a punch hole camera) is visually exposed. For example, at least a portion of the periphery of the region through which the first camera module 305 is visually exposed may be surrounded by the screen display area. In various embodiments, the first camera module 305 may include a plurality of camera modules (e.g., the camera module 180 of FIG. 1).

In various embodiments, the display 301 may be configured such that at least one of an audio module, a sensor module, a camera module (e.g., the first camera module 305), or a light emitting element is disposed on a rear surface of the screen display area (e.g., the first surface 310A and the first regions 310D). For example, the electronic device 300 may be configured such that the first camera module 305 (e.g., an under display camera (UDC)) is disposed on the rear side (e.g., the side facing the -z-axis direction) of the first surface 310A (e.g., the front surface) and/or the side surface 310C (e.g., at least one surface of the first regions 310D) so as to face toward the first surface 310A and/or the side surface 310C. For example, the first camera module 305 may be disposed under the display 301 and may not be visually exposed through the screen display area (e.g., the first surface 310A and the first regions 310D).

In various embodiments, when the first camera module 305 is implemented with an under display camera, the region of the display 301 that faces the first camera module 305 may be formed to be a transmissive region that has a specified transmittance as a portion of the display area that displays contents. For example, the transmissive region may have a transmittance of about 5% to about 50%. The transmissive region may include a region through which light for generating an image by being focused on an image sensor passes and that overlaps an effective region (e.g., a field of view (FOV) region) of the first camera module 305. For example, the transmissive region of the display 301 may include a region having a lower pixel density and/or wiring density than a surrounding region.

In an embodiment, the display 301 may be coupled with, or disposed adjacent to, touch detection circuitry, a pressure sensor capable of measuring the intensity (pressure) of a touch, and/or a digitizer that detects a stylus pen of a magnetic field type.

In an embodiment, the audio modules 303, 304, and 307 may include the microphone holes 303 and 304 and the speaker hole 307.

In an embodiment, the microphone holes 303 and 304 may include the first microphone hole 303 formed in a partial region of the third surface 310C and the second microphone hole 304 formed in a partial region of the second surface 310B. A microphone for obtaining external sound may be disposed in the microphone holes 303 and 304. The microphone may include a plurality of microphones to sense the direction of sound.

In an embodiment, the second microphone hole 304 formed in the partial region of the second surface 310B may be disposed adjacent to the camera modules 305, 312, and 313. For example, the second microphone hole 304 may obtain sounds when the camera modules 305, 312, and 313 are executed, or may obtain sounds when other functions are executed.

In an embodiment, the speaker hole 307 may include an external speaker hole 307 and a receiver hole for telephone call. The external speaker hole 307 may be formed in a portion of the third surface 310C of the electronic device 300. In an embodiment, the external speaker hole 307, together with the microphone hole 303, may be implemented as a single hole. The receiver hole for telephone call may be formed in another portion of the third surface 310C. For example, the receiver hole for telephone call may be formed in another portion (e.g., a portion facing the +y-axis direction) of the third surface 310C that faces the portion (e.g., a portion facing the -y-axis direction) of the third surface 310C in which the external speaker hole 307 is formed. According to various embodiments, the receiver hole for telephone call may not be formed in a portion of the third surface 310C and may be formed by a separation space between the front plate 302 (or, the display 301) and the side bezel structure 318.

In an embodiment, the electronic device 300 may include at least one speaker that is configured to output sound outside the housing 310 through the external speaker hole 307 or the receiver hole for telephone call. According to various embodiments, the speaker may include a piezoelectric speaker from which the speaker hole 307 is omitted.

In an embodiment, the sensor module may generate an electrical signal or a data value that corresponds to an operational state inside the electronic device 300 or an environmental state external to the electronic device 300. For example, the sensor module may include at least one of a proximity sensor, a heart rate monitor (HRM) sensor, a fingerprint sensor, a gesture sensor, a gyro sensor, an atmospheric pressure sensor, a magnetic sensor, an acceleration sensor, a grip sensor, a color sensor, an IR sensor, a biosensor, a temperature sensor, a humidity sensor, or an illuminance sensor.

In an embodiment, the camera modules 305, 312, and 313 may include the first camera module 305 (e.g., a punch hole camera) exposed on the first surface 310A of the electronic device 300, the second camera module 312 exposed on the second surface 310B, and/or the flash 313.

In an embodiment, the first camera module 305 may be visually exposed through a portion of the screen display area (e.g., the first surface 310A and the first regions 310D) of the display 301. For example, the first camera module 305 may be visually exposed on a partial region of the screen display area (e.g., the first surface 310A and the first regions 310D) through an opening that is formed in a portion of the display 301. In another example, the first camera module 305 (e.g., an under display camera) may be disposed on a rear surface of the display 301 and may not be visually exposed through the screen display area (e.g., the first surface 310A and the first regions 310D).

In an embodiment, the second camera module 312 may include a plurality of cameras (e.g., a dual camera, a triple camera, or a quad camera). However, the second camera module 312 is not necessarily limited to including the plurality of cameras and may include one camera.

In an embodiment, the first camera module 305 and the second camera module 312 may include one or more lenses, an image sensor, and/or an image signal processor. The flash 313 may include, for example, a light emitting diode or a xenon lamp. In an embodiment, two or more lenses (e.g., an IR camera lens, a wide angle lens, and a telephoto lens) and image sensors may be disposed on one surface of the electronic device 300.

In an embodiment, the key input devices 317 may be disposed on the third surface 310C of the housing 310 (e.g., the first regions 310D and/or the second regions 310E). In an embodiment, the electronic device 300 may not include all or some of the key input devices 317, and the key input devices 317 not included may be implemented in a different form, such as a soft key, on the display 301. In an embodiment, the key input devices may include a sensor module that forms the sensing region that is included in the screen display area (e.g., the first surface 310A and the first regions 310D).

In an embodiment, the connector hole 308 may accommodate a connector. The connector hole 308 may be disposed in the third surface 310C of the housing 310. For example, the connector hole 308 may be disposed in the third surface 310C so as to be adjacent to at least a part of the audio modules (e.g., the microphone hole 303 and the speaker hole 307). In an embodiment, the electronic device 300 may include the first connector hole 308 capable of accommodating a connector (e.g., a USB connector) for transmitting/receiving power and/or data with an external electronic device, and/or a second connector hole capable of accommodating a connector (e.g., an earphone jack) for transmitting/receiving audio signals with an external electronic device.

In an embodiment, the electronic device 300 may include the light emitting element. For example, the light emitting element may be disposed on the first surface 310A of the housing 310. The light emitting element may provide state information of the electronic device 300 in the form of light. In an embodiment, the light emitting element may provide a light source that operates in conjunction with operation of the first camera module 305. For example, the light emitting element may include a light-emitting diode (LED), an IR LED, and/or a xenon lamp.

FIG. 3 is a diagram of an electronic device according to an embodiment.

Referring to FIG. 3, the electronic device 300 according to an embodiment may include a front plate 320 (e.g., the front plate 302 of FIG. 2A), a display 330 (e.g., the display 301 of FIG. 2A), a side member 340 (e.g., the side bezel structure 318 of FIG. 2A), a printed circuit board 350, a rear case 360, a battery 370, a back plate 380 (e.g., the back plate 311 of FIG. 2B), and an antenna.

In various embodiments, the electronic device 300 may not include at least one component (e.g., the rear case 360) among the aforementioned components, or may additionally include other component(s). Some of the components of the electronic device 300 illustrated in FIG. 3 may be identical or similar to some of the components of the electronic device 300 illustrated in FIGS. 2A and 2B, and repetitive descriptions will hereinafter be omitted.

In an embodiment, the front plate 320 and the display 330 may be coupled to the side member 340. For example, based on FIG. 3, the front plate 320 and the display 330 may be disposed under the side member 340. The front plate 320 and the display 330 may be located in the +z-axis direction from the side member 340. For example, the display 330 may be coupled to the bottom of the side member 340, and the front plate 320 may be coupled to the bottom of the display 330. The front plate 320 may form a portion of an outer surface (or, the exterior) of the electronic device 300. The display 330 may be disposed between the front plate 320 and the side member 340 so as to be located inside the electronic device 300.

In an embodiment, the side member 340 may be disposed between the display 330 and the back plate 380. For example, the side member 340 may be configured to surround a space between the back plate 380 and the display 330.

In an embodiment, the side member 340 may include a frame structure 341 that forms a portion of a side surface of the electronic device 300 (e.g., the third surface 310C of FIG. 2A) and a plate structure 342 extending inward from the frame structure 341.

In an embodiment, the plate structure 342 may be disposed inside the frame structure 341 so as to be surrounded by the frame structure 341. The plate structure 342 may be connected with the frame structure 341, or may be integrally formed with the frame structure 341. The plate structure 342 may be formed of a metallic material and/or a non-metallic (e.g., polymer) material. In an embodiment, the plate structure 342 may support other components included in the electronic device 300. For example, at least one of the display 330, the printed circuit board 350, the rear case 360, or the battery 370 may be disposed on the plate structure 342. For example, the display 330 may be coupled to one surface (e.g., a surface facing the +z-axis direction) of the plate structure 342, and the printed circuit board 350 may be coupled to an opposite surface (e.g., a surface facing the -z-axis direction) that faces away from the one surface.

In an embodiment, the rear case 360 may be disposed between the back plate 380 and the plate structure 342. The rear case 360 may be coupled to the side member 340 so as to overlap at least a portion of the printed circuit board 350. For example, the rear case 360 may face the plate structure 342 with the printed circuit board 350 therebetween.

In an embodiment, a processor (e.g., the processor 120 of FIG. 1), a memory (e.g., the memory 130 of FIG. 1), and/or an interface (e.g., the interface 177 of FIG. 1) may be mounted on the printed circuit board 350. The processor may include, for example, one or more of a CPU, an AP, a GPU, an image signal processor, a sensor hub processor, or a communication processor. The memory may include, for example, a volatile memory or a non-volatile memory. The interface may include, for example, an HDMI, a USB interface, an SD card interface, and/or an audio interface. The interface may electrically or physically connect the electronic device 300 with an external electronic device and may include a USB connector, an SD card/MMC connector, or an audio connector.

In an embodiment, the battery 370 (e.g., the battery 189 of FIG. 1) may supply power to at least one component of the electronic device 300. For example, the battery 370 may include a primary cell that is not rechargeable, a secondary cell that is rechargeable, or a fuel cell. At least a portion of the battery 370 may be disposed on substantially the same plane as the printed circuit board 350. The battery 370 may be integrally disposed inside the electronic device 300, or may be disposed to be detachable from the electronic device 300.

In an embodiment, the antenna (e.g., the antenna module 197 of FIG. 1) may be disposed between the back plate 380 and the battery 370. The antenna may include, for example, a NFC antenna, a wireless charging antenna, and/or a MST antenna. For example, the antenna may perform short-range communication with an external device, or may wirelessly transmit and receive power required for charging.

In an embodiment, the first camera module 305 may be disposed on at least a portion (e.g., the plate structure 342) of the side member 340 such that a lens receives external light through a partial region of the front plate 320 (e.g., the front surface 310A of FIG. 2A). For example, the lens of the first camera module 305 may be visually exposed through a partial region of the front plate 320. A camera region 337 (e.g., an opening region or a light transmitting region) corresponding to the first camera module 305 may be formed in the display 330.

In an embodiment, the second camera module 312 may be disposed on the printed circuit board 350 such that a lens receives external light through a camera region 384 of the back plate 380 (e.g., the rear surface 310B of FIG. 2B) of the electronic device 300. For example, the lens of the second camera module 312 may be visually exposed through the camera region 384. In an embodiment, the second camera module 312 may be disposed in at least a portion of an inner space formed in the housing of the electronic device 300 (e.g., the housing 310 of FIGS. 2A and 2B) and may be electrically connected to the printed circuit board 350 through a connecting member (e.g., a connector).

In an embodiment, the camera region 384 may be formed on a surface of the back plate 380 (e.g., the rear surface 310B of FIG. 2B). In an embodiment, the camera region 384 may be formed to be at least partially transparent such that external light is incident on the lens of the second camera module 312. In an embodiment, at least a portion of the camera region 384 may protrude to a predetermined height from the surface of the back plate 380. However, without being necessarily limited thereto, the camera region 384 may form substantially the same plane as the surface of the back plate 380.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

FIG. 4 is a diagram of an electronic device according to an embodiment.

Referring to FIG. 4, the electronic device 300 may include the side member 340, the printed circuit board 350, and an electrical connection member 401.

The side member 340 may define a side surface (e.g., the side surface 310C of FIG. 2A) of the electronic device 300, and the printed circuit board 350 and/or the battery 370 may be disposed in an interior space defined by the side member 340.

The printed circuit board 350 may be disposed to avoid from the battery 370 or to partially overlap the battery 370. The printed circuit board 350 may include a first printed circuit board 351, and/or a second printed circuit board 352. For example, the first printed circuit board 351 and the second printed circuit board 352 may be disposed to be spaced apart from each other. The first printed circuit board 351 may be disposed in an upper end area (e.g., an area in the +Y direction of FIG. 4) of the battery 370, and the second printed circuit board 352 may be disposed in a lower end area (e.g., an area in the -Y direction of FIG. 4) of the battery 370. The first printed circuit board 351 and the second printed circuit board 352 may be electrically connected to each other through a board connecting member 390 (e.g., a board to board (B to B) connector or a flexible printed circuit board (FPCB)).

At least one communication circuit and/or an antenna may be disposed in the first printed circuit board 351 and/or the second printed circuit board 352. For example, a processor (e.g., the processor 120 of FIG. 1) and at least one communication circuit may be disposed on the first printed circuit board 351, and an antenna may be disposed on the second printed circuit board 352. The communication circuit disposed on the first printed circuit board 351, and the antenna disposed on the second printed circuit board 352 may be electrically connected to each other through the electrical connection member 401. The electrical connection member 401 may include a cable (e.g., a cable 410 of FIG. 5) and a head (e.g., a head 500 of FIG. 5), and a detailed description thereof will be described with reference to FIG. 5.

FIG. 5 is a diagram of an electrical connection member according to an embodiment. FIG. 6 is a diagram of the electrical connection member of FIG. 5 according to an embodiment. In the following description, a direction, in which the head and a receptacle (e.g., a receptacle 1030 of FIG. 10) is press-fitted with each other, may be referred to as "a first direction D1 (or the Z direction of FIG. 3)", an axial direction of the cable 410, as "a second direction D2", and a direction that is perpendicular to the first direction D1 and the second direction D2, as "a third direction D3".

Referring to FIGS. 5 and 6, the electrical connection member 401 may include the cable 410, the head 500, and a boss structure 600. For example, the electrical connection member 401 may be a coaxial cable.

The cable 410 may be a transmission unit for transmitting signals. One end of the cable 410 may be mounted on the head 500. The cable 410 may have an internal conductor 411, an internal insulator, an external conductor 412, and a sheath 413 sequentially from an inner center toward an outermost side thereof. The sheath 413 may be peeled such that at least portions of the internal conductor 411 and the external conductor 412 are exposed by a specific length. The internal conductor 411 may transmit signals to the spaced electronic parts. For example, the internal conductor 411 may transmit signals from a first electronic part (e.g., the communication circuit) disposed in the first printed circuit board (e.g., the first printed circuit board 351 of FIG. 4) to a second electronic part (e.g., the antenna) disposed in the second printed circuit board (e.g., the second printed circuit board 352 of FIG. 4). The external conductor 412 may be disposed to surround the internal conductor 411 while the internal insulator being interposed therebetween. The external conductor 412 may function as a ground of the electrical connection member 401 and thus may shield the internal conductor 411.

The head 500 may include an insulator 510, a contact member 520, and an outer shell 530.

The contact member 520 may be disposed in an interior space surrounded by the outer shell 530. The contact member 520 may contact the internal conductor 411 of the cable 410 and may be electrically connected to the internal conductor 411 of the cable 410. The contact member 520 may contact a conductive filler (e.g., a conductive filler 1033 of FIG. 10) of the receptacle to be electrically connected to the conductive filler when the head 500 and a receptacle (e.g., a receptacle 1030 of FIG. 10) are coupled to each other. An electrical path may be formed between the conductive filler of the receptacle, the contact member 520 of the head 500, and the internal conductor 411 of the cable 410. For example, the electrical path may be utilized as a path for transmitting RF signals from the communication circuit disposed in the printed circuit board (e.g., the printed circuit board 350 of FIG. 4) to the antennas disposed to be spaced apart from the communication circuit.

The insulator 510 may be disposed in a space between the outer shell 530 and the contact member 520. For example, the insulator 510 may be disposed in the space between the outer shell 530 and the contact member 520 in an injection-molding scheme. The insulator 510 may insulate the outer shell 530 formed of a conductive material, and the contact member 520 formed of insulation conductive material. The insulator 510 may prevent the outer shell 530 from being deformed by the receptacle that contacts the contact member 520 when the head 500 and the receptacle are coupled to each other. For example, the insulator 510 may be formed of an insulation material, such as polypropylene.

The outer shell 530 may include an inner wall area 532, an outer wall area 533, and a cover area 531.

The outer wall area 533 may protrude from one surface (e.g., a surface that faces the first direction D1) of the outer shell 530 toward the receptacle. The outer wall area 533 may be disposed to surround at least a portion of the inner wall area 532.

The inner wall area 532 may protrude from one surface of the outer shell 530 toward the receptacle. At least a portion of the inner wall area 532 may have a ring shape. The inner wall area 532 may be coupled to an outer peripheral surface of the receptacle. The inner wall area 532 may be disposed to be surrounded by an outer peripheral surface of a conductive side wall (e.g., a conductive side wall 1031 of FIG. 10) of the receptacle when the head 500 and the receptacle are coupled to each other.

An electrical path may be formed between the inner wall area 532 and the conductive side wall of the receptacle. For example, the inner wall area 532 may be connected to a ground included in the printed circuit board.

The cover area 531 may include a first cover area 5311, a second cover area 5312, and a third cover area 5313. The first cover area 5311 may be formed to surround at least a portion of the outer shell 530. The second cover area 5312 may be formed to surround at least a portion of the external conductor 412 of the cable 410. The second cover area 5312 may be electrically connected to the external conductor 412 of the cable 410. The third cover area 5313 may be formed to surround at least a portion of the sheath 413 of the cable 410.

The boss structure 600 may include a through-hole 610 coupled to the cable 410. The through-hole 610 may be formed to pass through the boss structure 600 in an axial direction (the direction D2) of the cable 410. A diameter of the through-hole 610 may be the same as or similar to a diameter of the cable 410. The boss structure 600 may be disposed to be adjacent to the head 500 of the electrical connection member. The boss structure 600 may protrude toward the printed circuit board (e.g., the printed circuit board 350 of FIG. 4) further than the head 500. As a spacing distance between the boss structure 600 and the first cover area 5311 of the outer shell 530 becomes smaller, an assembly tolerance may be reduced. For example, the spacing distance between the boss structure 600 and the first cover area 5311 of the outer shell 530 may be maintained within 5 mm.

The boss structure 600 may be formed of a conductive material and/or an insulation material. As an example, the boss structure 600 may be formed of the same insulation material as that of the insulator 510. As another example, the boss structure 600 may be formed of the same conductive material as that of at least one of the outer shell 530 and the contact member 520. For example, the contact member 520 may be formed of copper (Cu) or an alloy including copper.

FIGS. 7A and 7B are diagrams of various examples of method for coupling an outer shell (e.g., the outer shell 530 of FIG. 6) of an electrical connection member and a boss structure 600 according to an embodiment.

Referring to FIGS. 7A and 7B, the outer shell of the electrical connection member may be formed in a form (e.g., two pieces) that is distinguished from the boss structure 600 and may be coupled to the boss structure 600. The boss structure 600 may be coupled to the cover area 531 of the outer shell. For example, the boss structure 600 may be coupled to the third cover area (e.g., the third cover area 5313 of FIG. 6).

As an example, the cover area 531 of the outer shell, as illustrated in FIG. 7A, may be coupled to the boss structure 600 in an insertion structure form. At least a portion of an outer peripheral surface of the cover area 531 may be formed in a screw form. The boss structure 600, into which the cover area 531 is inserted, may include the through-hole 610 in a form of a screw thread, which is a complementary shape that may be engaged with the cover area 531 of a screw form. The cover area 531 may be inserted into the through-hole 610 of the boss structure 600 by rotating any one of the cover area 531 and the boss structure 600.

As another example, the cover area 531 of the outer shell, as illustrated in FIG. 7B, may be coupled to the boss structure 600 in a fitting structure form. A stopper boss 5321 that protrudes toward an outside of the cover area 531 may be formed at at least a portion of the cover area 531. The stopper boss 5321 may protrude from at least a partial area of an outer peripheral surface of the cover area 531 toward an outside. The boss structure 600 coupled to the cover area 531 may include the through-hole 610 and a stopper recess 6101, which are connected to each other, in an interior thereof. As the boss structure 600 is rotated in a clockwise or counterclockwise direction after the cover area 531 is inserted into the through-hole 610, the stopper boss 5321 may be stopped by the stopper recess 6101.

FIG. 8 are diagrams of an example of an electrical connection member according to an embodiment.

Referring to FIG. 8, the boss structure 600 of an electrical connection member 801 may be integral with at least one of the outer shell 530 and the insulator 510 to be formed in one body (one piece). For example, the boss structure 600 may be integrally formed with the outer shell 530.

At least one boss structure 600 may be integrally formed with at least one of the cover area 531, the inner wall area 532, and the outer wall area 533 of the outer shell 530. As an example, the boss structure 600 may be integral with at least one of the first cover area 5311, the second cover area 5312, and the third cover area 5313. The boss structure 600 integral with the cover area 531 may include a through-hole (e.g., the through-hole 610 of FIG. 6), into which the cable 410 is inserted. As another example, the boss structure 600 that is integral with at least one of the inner wall area 532 and the outer wall area 533 may not include a through-hole.

According to an embodiment, the boss structure 600 may include a first boss structure 611 and a second boss structure 612, which are integral with the outer wall area 533. The first boss structure 611 and the second boss structure 612 may be disposed to be spaced apart from each other while the inner wall area 532 being interposed therebetween. The first boss structure 611 and the second boss structure 612 may be formed without the through-hole 610. The first boss structure 611 and the second boss structure 612 may protrude in the first direction (the direction D1) that faces the printed circuit board (e.g., a printed circuit board 1020 of FIG. 10) and/or the receptacle (e.g., the receptacle 1030 of FIG. 10). The first boss structure 611 may protrude from the outer wall area 533 located on one side of the inner wall area 532. The second boss structure 612 may protrude from the outer wall area 533 located on an opposite side of the inner wall area 532.

FIG. 9 is a cross-sectional view illustrating an example of an electrical connection member according to an embodiment.

Referring to FIG. 9, an electrical connection member 901 disclosed herein may include a cable 810 and a boss structure 900.

The cable 810 may include an external conductor 812, and a sheath 813 that surrounds a portion of the external conductor 812. The sheath 813 may be formed at at least a portion of the remaining area, and may not be formed at an area that overlaps the boss structure 900. The sheath 813 may be removed from the area that overlaps the boss structure 900.

The boss structure 900 may include a first boss structure 911 attached to one end of the sheath 813, and a second boss structure 912 attached to an opposite end of the sheath 813. The first boss structure 911 and the second boss structure 912 may protrude to face a printed circuit board (e.g., the printed circuit board 1020 of FIG. 10) and/or a receptacle (e.g., the receptacle 1030 of FIG. 10).

The boss structure 900 may be attached to the sheath 813 and the external conductor 812 through a scheme of pressing with the sheath 813 in a state, in which a portion of the sheath 813 is removed. The boss structure 900 may contact a side surface of the external conductor 812. When the boss structure 900 is formed of a conductive material, the boss structure 900 may form an electrical path with the external conductor 812.

FIG. 10 is a diagram of an electronic device including an opening according to an embodiment.

Referring to FIG. 10, the electronic device (e.g., the electronic device 300 of FIG. 4) disclosed herein may include a printed circuit board 1020 and a mechanism 1010 (e.g., the plate structure 342 of the side member 340 of FIG. 3).

The printed circuit board 1020 may be disposed on the mechanism 1010. The receptacle 1030 may be disposed in the printed circuit board 1020. The receptacle 1030 may include a base structure 1032, the conductive side wall 1031, and the conductive filler 1033.

The base structure 1032 may be disposed in the printed circuit board 1020. The base structure 1032 may be formed of an insulation material. The base structure 1032 may electrically isolate or insulate the conductive side wall 1031 and the conductive filler 1033 from each other.

The conductive side wall 1031 may protrude from the base structure 1032 in a direction (e.g., a -D1 direction) that faces a head (e.g., the head 500 of the electrical connection member 410 of FIG. 5) of the electrical connection member. The conductive side wall 1031 may contact an inner wall area (e.g., the inner wall area 532 of FIG. 6) of the head. The conductive side wall 1031 may have a shape corresponding to the inner wall area. For example, the conductive side wall 1031 may have a ring shape. The conductive side wall 1031 having the ring shape may be disposed to surround at least a portion of the inner wall area of the head when the receptacle 1030 and the head are coupled to each other. The conductive side wall 1031 has a diameter that is larger than that of the inner wall area of the head, and thus the conductive side wall 1031 surrounds an outer peripheral surface of the inner wall area of the head when the receptacle 1030 and the head are coupled to each other. The conductive side wall 1031 may electrically and physically contact the inner wall area of the head.

The conductive filler 1033 may protrude from the base structure 1032 in a direction (e.g., the -D1 direction) that is the same as that of the conductive side wall 1031. The conductive filler 1033 may contact a contact member (e.g., the contact member 520 of FIG. 6) when the head and the receptacle 1030 are coupled to each other. The conductive filler 1033 may be electrically connected to the contact member. An electrical path may be formed between the conductive filler 1033, the contact member, and the cable. For example, the electrical path may be utilized as a path for transmitting RF signals from the communication circuit disposed in the printed circuit board 1020 to the antenna spaced apart from the communication circuit.

At least one opening 1000 may be disposed around the receptacle 1030. A depth of the opening 1000 may become different according to a height of the boss structure (e.g., the boss structure 600 of FIG. 6) inserted into the opening 1000. As an example, the opening 1000 may be formed in a recess form, in which a portion of the printed circuit board 1020 is removed, or may be formed in a hole form that passes through the printed circuit board 1020. As another example, the opening 1000 may be formed in the printed circuit board 1020, or may be formed in the printed circuit board 1020 and the mechanism 1010.

FIG. 11A is a diagram of a first example of a boss structure of an electrical connection member according to an embodiment. FIG. 11B is a diagram of an electronic device having an opening, into which the boss structure illustrated in FIG. 11A is inserted according to an embodiment. FIG. 12A is a diagram of a second example of a boss structure of an electrical connection member according to an embodiment. FIG. 12B is a diagram of an electronic device having an opening, into which the boss structure illustrated in FIG. 12A is inserted according to an embodiment. FIG. 13A is a diagram a third example of a boss structure of an electrical connection member according to an embodiment. FIG. 13B is a diagram of an electronic device having an opening, into which the boss structure illustrated in FIG. 13A is inserted according to an embodiment..

Referring to FIGS. 11A to 13B, the boss structure 600 of the electrical connection member and an opening 1100, into which the boss structure 600 is inserted, may be implemented in various forms. The opening 1100 may be disposed to be adjacent to a receptacle 1130 around the receptacle 1130.

As an example, the boss structure 600 illustrated in FIG. 11A may include a boss surface 601 that faces the printed circuit board (e.g., a printed circuit board 1120 of FIG. 11B). The boss surface 601 may have a polygonal shape (e.g., a four-sided shape) or a shape, at least a portion of which has a curvature. The boss surface 601 may have a first length L1 that is parallel to a depth direction (e.g., the second direction D2) of the through-hole 610, and a second length L2 that is parallel to a widthwise direction (e.g., the third direction D3) of the through-hole 610. For example, the first length L1 may have the same size as the depth of the through-hole 610, and the second length L2 may have a size that is larger than the depth of the through-hole 610. The boss structure 600, as illustrated in FIG. 11B, may be inserted into the opening 1100 formed in the printed circuit board 1120. The opening 1100 may be formed by removing at least a portion of the printed circuit board 1120. The opening 1100 may have a polygonal shape or a shape, at least a portion of which has a curvature, which corresponds to the boss surface 601 of the boss structure 600.

As an example, the boss structure 600 illustrated in FIG. 12A may include the boss surface 601 that faces the printed circuit board (e.g., a printed circuit board 1120 of FIG. 12B), and a base surface 602. The boss surface 601 and the base surface 602 may have a polygonal shape (e.g., a four-sided shape) or a shape, at least a portion of which has a curvature. The through-hole 610 that passes through the boss structure 600 may overlap at least one of the boss surface 601 and/or the base surface 602. The boss surface 601 may include a first boss surface 6011 and a second boss surface 6012, which are spaced apart from each other. The first boss surface 6011 and the second boss surface 6012 may be spaced apart from each other while the base surface 602 being interposed therebetween. The first boss surface 6011 and the second boss surface 6012 may protrude toward the printed circuit board 1120 further than the base surface 602. The first boss surface 6011 and the second boss surface 6012 may be inserted into the opening 1100 of the printed circuit board 1120 illustrated in FIG. 12B. The opening 1100 may include a first sub opening 1101 corresponding to the first boss surface 6011, and a second sub opening 1102 corresponding to the second boss surface 6012. The first sub opening 1101 and the second sub opening 1102 may be disposed to be spaced apart from each other while a space corresponding to the base surface 602 being interposed therebetween.

As another example, the boss structure 600 illustrated in FIG. 13A may include the boss surface 601 that faces the printed circuit board 1120. The boss surface 601 may have a bent shape. For example, the boss surface 601 may have an "L" shape. The boss surface 601 may include the first boss surface 6011, and the second boss surface 6012 that forms a specific angle with the first boss surface 6011. The boss structure 600 may include at least one through-hole 610. For example, the through-hole 610 may be formed to pass through the bent area of the boss structure 600. The first boss surface 6011 and the second boss surface 6012 may protrude toward the printed circuit board 1120 and may be inserted into the opening 1100 of the printed circuit board 1120 illustrated in FIG. 13B. The opening 1100 may be formed in a bent shape to correspond to the boss surface 601 when the printed circuit board 1120 is viewed from a top. The boss structure 600 inserted into the opening 1100 may face at least two surfaces of the receptacle 1130.

FIG. 14 is a diagram of an example of an electronic device including an electrical connection member inserted into an opening according to an embodiment. FIG. 14 illustrates only one end area of the cable, but the same components (e.g., the head and the receptacle) may be disposed in an opposite end area of the cable.

Referring to FIG. 14, an electronic device 1401 (e.g., the electronic device 300 of FIG. 4) may include the electrical connection member 401 and the printed circuit board 1120.

The electrical connection member 401 may include the cable 410 and the head 500. The head 500 may be connected to one end and/or an opposite end of the cable 410 to be coupled to the receptacle 1130 disposed in the printed circuit board and configured to be separable from the receptacle 1130.

The boss structure 600 may be coupled to at least one of the cable 410 and the head 500 of the electrical connection member 401, or may be integral with at least one of the cable 410 and the head 500 of the electrical connection member 401.

The printed circuit board 1120 may be seated on a mechanism 1510 (e.g., the plate structure 342 of the side member 340 of FIG. 3). The receptacle 1130 may be disposed in the printed circuit board 1120. The receptacle 1130 may be coupled to the head 500 by an operator. The receptacle 1130 may include a base structure 1132 (e.g., the base structure 1032 of FIG. 10), and a conductive side wall 1131 (e.g., the conductive side wall 1031 of FIG. 10).

The printed circuit board 1120 may include the at least one opening 1100. The opening 1100 may be formed in a form of a recess or a hole by removing at least a portion of the printed circuit board 1120. The opening in the form of a recess may be formed to be recessed from one surface 1121 of the printed circuit board 1120, on which the receptacle 1130 is formed, toward an opposite surface 1122 of the printed circuit board 1120, which contacts the mechanism 1510. The opening 1100 in the form of a hole may be formed in a form that passes through the printed circuit board 1120, in which the receptacle 1130 is formed, from the one surface 1121 to the opposite surface 1122 thereof.

Accordingly, the head 500 may be arranged on the conductive side wall 1131 of the receptacle 1130 as the boss structure 600 is inserted into the opening 1100 formed in the printed circuit board 1120. As the operator presses the head 500 toward the printed circuit board 1120, the head 500 may be coupled to the conductive side wall 1131 of the receptacle 1130 and the conductive filler (e.g., the conductive filler 1033 of FIG. 10). By the boss structure 600, the head 500 of the electrical connection member 401 may be coupled to the receptacle 1130 while being parallel to the receptacle 1130. The head 500 may be disposed on the base structure 1132.

FIG. 15 is a diagram of an example of an electronic device including an electrical connection member inserted into an opening according to an embodiment. FIG. 15 illustrates only one end area of the cable, but the same components (e.g., the head and the receptacle) may be disposed in an opposite end area of the cable.

Referring to FIG. 15, an electronic device 1501 (e.g., the electronic device 300 of FIG. 4) may include the electrical connection member 401 including the head 500 and the cable 410, the printed circuit board 1120, and the mechanism 1510.

The printed circuit board 1120 may include the first opening 1101 and the second opening 1102, which are connected to each other. The first opening 1101 may be formed in the printed circuit board 1120. The first opening 1101 may be formed in a form that passes through the printed circuit board 1120 from the one surface 1121, on which the receptacle 1130 is formed, toward the opposite surface 1122, which contacts the mechanism 1510. The second opening 1102 may be formed in the mechanism 1510 (e.g., the plate structure 342 of the side member 340 of FIG. 3). As an example, the second opening 1102 may be formed in a recess form that is concave from one surface 1511 of the mechanism 1510, which contacts the opposite surface of the printed circuit board 1120 toward the opposite surface 1512 of the mechanism 1510, which faces the one surface 1511. As another example, the second opening 1102 may be formed in a form of a hole that passes through the mechanism 1510 from the one surface 1511 to the opposite surface that faces the one surface 1511. At least one of the first opening 1101 and the second opening 1102 may be formed to have a depth in a direction that is perpendicular to the one surface 1121 of the printed circuit board 1120.

According to an embodiment, the head 500 may be arranged on the conductive side wall 1131 of the receptacle 1130 as the boss structure 600 is inserted into the first opening 1101 formed in the printed circuit board 1120 and the second opening 1102 formed in the mechanism 1510. As the operator presses the head 500 toward the printed circuit board 1120, the head 500 may be coupled to the conductive side wall 1131 of the receptacle 1130. By the boss structure 600, the head 500 of the electrical connection member 401 may be coupled to the receptacle 1130 while being parallel to the receptacle 1130.

FIG. 16 is a diagram of a case, in which arrangement locations of a receptacle and a head of an electronic device are misaligned according to an embodiment. FIG. 16 illustrates only one end area of the cable, but the same components (e.g., the head and the receptacle) may be disposed in an opposite end area of the cable.

Referring to FIG. 16, the boss structure 600 may be, by the operator, inserted into the first opening 1101 formed in the printed circuit board 1120, and the second opening 1102 formed in the mechanism 1510. The boss structure 600 may fail to be arranged in an interior of the opening 1100 at a proper location and may be inserted obliquely due to an error of an arrangement process or a mistake of the operator. For example, the proper location may be a location, at which the printed circuit board 1120 and an inner surface 1151 of the mechanism 1510 provided with the opening 1100, and an outer surface 651 of the boss structure 600 are disposed in parallel to each other. When the location of the boss structure 600 is misaligned and thus the head 500 and the receptacle 1130 are misaligned, the boss structure 600 and the inner surface 1151 may restrict movement of the head 500. Accordingly, the head 500 spaced apart from the receptacle 1130, and the receptacle 1130 cannot be coupled to each other, and thus damage to at least one of the head 500 and the receptacle 1130 may be prevented.

FIG. 17 is a diagram of example of an electronic device including an electrical connection member inserted into an opening according to an embodiment. FIG. 17 illustrates only one end area of the cable, but the same components (e.g., the head and the receptacle) may be disposed in an opposite end area of the cable.

Referring to FIG. 17, the electronic device (e.g., the electronic device 300 of FIG. 4) may include the electrical connection member 401, the printed circuit board 1120, and a boss structure 1710.

The electrical connection member 401 may include the cable 410 and the head 500. The head 500 may be connected to one end and/or an opposite end of the cable 410 to be coupled to the receptacle 1130 disposed in the printed circuit board and configured to be separable from the receptacle 1130.

The boss structure 1710 may include a first boss area 1711 and a second boss area 1712. The first boss area 1711 may be integral with the electrical connection member 401 or may be coupled to the electrical connection member 401. The second boss area 1712 may be integrally formed with the first boss area 1711 to extend from the first boss area 1711 toward an opening 1700. The second boss area 1712 may be inserted into the opening 1700.

At least one of the first boss area 1711 and the second boss area 1712 may extend in a direction that is inclined with respect to the one surface 1121 of the printed circuit board 1120. As an example, the first boss area 1711 and the second boss area 1712 may extend in a direction that is inclined with respect to the one surface 1121 of the printed circuit board 1120. As another example, the first boss area 1711 may extend in a direction that is perpendicular to the one surface 1121 of the printed circuit board 1120, and the second boss area 1712 may extend in a direction that is inclined with respect to the one surface 1121 of the printed circuit board 1120. At least one of the first boss area 1711 and the second boss area 1712 may extend in a direction that is inclined with respect to the one surface 1121 of the printed circuit board 1120 in consideration of movement direction of the electrical connection member 401 during the arrangement. At least one of the first boss area 1711 and the second boss area 1712 may extend in a direction that is inclined toward an area of the printed circuit board 1120, which overlaps the receptacle 1130.

The opening 1700 may include a first opening 1701 and a second opening 1702, which are connected to each other. The first opening 1701 may be formed in the printed circuit board 1120. The first opening 1701 may be formed in a form of a hole that passes through the printed circuit board 1120 from the one surface 1121, on which the receptacle 1130 is formed, toward the opposite surface 1122, which contacts the mechanism 1510. The first opening 1701 may be formed to have a depth in a direction that is inclined with respect to one surface 1121 of the printed circuit board 1120. The second opening 1702 may be formed in a recess form that is concave from one surface 1511 of the mechanism 1510, which contacts the opposite surface of the printed circuit board 1120 toward the opposite surface 1512 of the mechanism 1510, which faces the one surface 1511. The second opening 1702 may be formed to have a depth in a direction that is inclined with respect to one surface 1511 of the mechanism 1510.

According to an embodiment, the head 500 may be arranged on the receptacle 1130 as the boss structure 1710 is obliquely inserted into the opening 1100 formed in the printed circuit board 1120. The head 500 may be coupled to the receptacle 1130 as the operator pressed the head 500 toward the printed circuit board 1120. By the boss structure 1710, the head 500 of the electrical connection member 401 may be coupled to the receptacle 1130 while being parallel to the receptacle 1130.

FIG. 18 is a diagram of an electronic device including a plurality of boss structures according to an embodiment.

Referring to FIG. 18, the electronic device (e.g., the electronic device 300 of FIG. 4) may include a plurality of boss structures 1810. The boss structure 1810 may include a first boss structure 1811 that protrudes from an inner wall area 1832 of an electrical connection member 1801, and a second boss structure 1812 that protrudes from a cover area 1831. As an example, the first boss structure 1811 and the second boss structure 1812 may be inserted into an opening (e.g., the opening 1000 of FIG. 10) disposed in the printed circuit board 1020. As another example, the first boss structure 1811 and the second boss structure 1812 may be inserted into an opening (e.g., the opening 1000 of FIG. 10) disposed in the printed circuit board 1020 and the mechanism 1510.

The electrical connection member 1801 coupled to or integrally formed with the plurality of boss structures 1810 may be coupled while being stably arranged with the receptacle 1130 disposed in the printed circuit board 1020, as compared with one boss structure is provided.

FIG. 19 is a diagram of an electronic device including a boss structure having a connection terminal according to an embodiment. FIG. 20 is a cross-sectional view illustrating an electronic device illustrated in FIG. 19 according to an embodiment.

Referring to FIGS. 19 and 20, the electronic device (e.g., the electronic device 300 of FIG. 4) may include a boss structure 1910 including a connection terminal 1950, and the printed circuit board 1120.

The boss structure 1910 may include a plurality of outer surfaces 1951. The plurality of outer surfaces 1951 may face inner surfaces 1961 and 1962 disposed in an interior of an opening 1900. At least one connection terminal 1950 may be disposed on any one of the plurality of outer surfaces 1951. The connection terminal 1950 may be a C-clip of a conductive material.

The connection terminal 1950 inserted into the opening 1900 may be formed to protrude from the outer surface 1951 of the boss structure 1910 toward the inner surfaces 1961 and 1962 of the opening 1900.

As an example, when the opening 1900 is formed in the printed circuit board 1120, except for the mechanism 1510, the connection terminal 1950 may be formed to protrude from the outer surface 1951 of the boss structure 1910 toward the first inner surface 1961 of the printed circuit board 1120. The connection terminal 1950 may be electrically connected to the first inner surface 1961 of the printed circuit board 1120. When the head 500 of the electrical connection member 401 and the receptacle 1130 are coupled to each other, electrical paths may be formed between the conductive side wall (e.g., the conductive side wall 1031 of FIG. 10) of the receptacle 1130, the outer shell 530 of the head 500, the connection terminal 1950 of the boss structure 1910, and the printed circuit board 1120. For example, the electrical paths may be used as paths for receiving a ground through the printed circuit board 1120. The outer shell 530 of the electrical connection member 401 and the receptacle 1130 may be grounded to the printed circuit board 1120 through the connection terminal 1950.

As an example, when the opening 1900 is formed in the mechanism 1510 and the printed circuit board 1120, the connection terminal 1950 may be formed to protrude from the outer surface 1951 of the boss structure 1910 toward the second inner surface 1962 of the mechanism 1510. The connection terminal 1950 may be electrically connected to the second inner surface 1962 of the mechanism 1510. When the head 500 of the electrical connection member 401 and the receptacle 1130 are coupled to each other, electrical paths may be formed between the conductive side wall of the receptacle 1130, the outer shell 530 of the head 500, the connection terminal 1950 of the boss structure 1910, and the mechanism 1510. For example, the electrical paths may be used as paths for receiving a ground through the mechanism 1510. The outer shell 530 of the electrical connection member 401 and the receptacle 1130 may be grounded to the mechanism 1510 through the connection terminal 1950.

As another example, when the opening 1900 is formed in the mechanism 1510 and the printed circuit board 1120, the connection terminal 1950 may be formed to protrude from the outer surface 1951 of the boss structure 1910 toward the first inner surface 1961 and the second inner surface 1962. The connection terminal 1950 may be electrically connected to the first inner surface 1961 and the second inner surface 1962. When the head 500 of the electrical connection member 401 and the receptacle 1130 are coupled to each other, electrical paths may be formed between the conductive side wall of the receptacle 1130, the outer shell 530 of the head 500, the connection terminal 1950 of the boss structure 1910, the printed circuit board 1120, and the mechanism 1510. For example, the electrical paths may be used as paths for receiving a ground through the printed circuit board 1120 and the mechanism 1510. The outer shell 530 of the electrical connection member 401 and the receptacle 1130 may be grounded to the printed circuit board 1120 and the mechanism 1510 through the connection terminal 1950.

FIG. 21 is a diagram of an electronic device including a boss structure having a fixing member according to an embodiment.

Referring to FIG. 21, the electronic device (e.g., the electronic device 300 of FIG. 4) may include a boss structure 2110 including a fixing member 2120, the printed circuit board 1120, and the mechanism 1510.

The boss structure 2110 may be integral with the electrical connection member 401 or may be coupled to the electrical connection member 401. The boss structure 2110 may be inserted into an opening 2100. The boss structure 2110 may include the fixing member 2120. The fixing member 2120 may be formed of an elastic material. For example, the fixing member 2120 may have a C-clip or hook shape.

The opening 2100 may include a first opening 2101, a second opening 2102, and a third opening 2103. The first opening 2101 may be formed in the printed circuit board 1120. The first opening 2101 may be formed in a form of a hole that passes through the printed circuit board 1120 in the first direction D1 that is a coupling direction of the receptacle 1130 and the head 500. The first opening 2101 may be formed to have a depth in the first direction D1 that is the coupling direction of the receptacle 1130 and the head 500. The second opening 2102 may remove at least a portion of the mechanism 1510 in the first direction D1. The second opening 2102 may be formed in a recess form that is concave toward the first direction D1, or in a hole form that passes through the mechanism 1510 in the first direction D1. The third opening 2103 may be formed to extend from the second opening 2102 in the second direction D2 that is an axial direction of the cable 410. The third opening 2103 may be connected to the second opening 2102. The third opening 2103 may be formed to be concave in a direction that crosses the depth direction of the second opening 2102. As an example, the third opening 2103 connected to the second opening 2102 in the recess form may be formed in an interior of the mechanism 1510. As another example, the third opening 2103 connected to the second opening 2102 in the recess form may be connected to an outer space of the mechanism 1510.

According to an embodiment, the head 500 may be arranged on the conductive side wall 1131 of the receptacle 1130 as the boss structure 600 is inserted into the opening 1100 formed in the printed circuit board 1120. When the boss structure 2110 is inserted, the fixing member 2120 may protrude after moving along the inner surfaces provided in the first opening 2101 and the second opening 2102 and may be accommodated in the third opening 2103. As the operator presses the head 500 toward the printed circuit board 1120, the head 500 may be coupled to the conductive side wall 1131 of the receptacle 1130. During the arrangement and the coupling, the boss structure 2110 may be prevented from being separated to an outside of the opening 2100 as the fixing member 2120 is stopped by the third opening 2103. Accordingly, detachment of the electrical connection member 401 coupled to the boss structure 2110 may be prevented.

Although FIG. 21 illustrates the structure, in which the third opening 2103 is formed in the mechanism 1510, as an example, the third opening 2103 may not be formed in the mechanism 1510 but may be formed in an interior of the printed circuit board 1120 in addition.

FIG. 22 is a diagram of an example of a disposition relationship of electrical connection members according to an embodiment. FIG. 23 is a diagram of an example of a disposition relationship of electrical connection members according to an embodiment.

Referring to FIGS. 22 and 23, the electronic device (e.g., the electronic device 300 of FIG. 4) may include a plurality of electrical connection members 2201. The plurality of electrical connection members 2201 may be disposed to be spaced apart from each other. The plurality of electrical connection members 2201 may be coupled to the plurality of receptacles 1130 disposed on the same printed circuit board (e.g., the printed circuit board 350 of FIG. 4) to be spaced apart from each other, respectively.

As an example, the plurality of receptacles 1130, as illustrated in FIG. 22, may be arranged in a straight line form toward a direction that is parallel to a boss structure 2250. An imaginary line that connects center of the plurality of receptacles 1130 may be parallel to the boss structure 2250. The plurality of electrical connection members 2201 coupled to the plurality of receptacles 1130 respectively may be arranged in a row. The plurality of electrical connection members 2201 disposed in a row may be coupled to one boss structure 2250. One boss structure 2250 may be disposed for each of the plurality of electrical connection members 2201. For example, one boss structure 2250 may be disposed for two of the plurality of electrical connection members 2201. At least a portion of an area of the boss structure 2250, which overlaps the electrical connection member 2201, may protrude toward the printed circuit board. At least a portion of an area of the boss structure 2250, which does not overlap the electrical connection member 2201, may not protrude toward the printed circuit board. The boss structure 2250 in the area that does not overlap the electrical connection member 2201 may face one surface of the printed circuit board.

As another example, the plurality of receptacles 1130, as illustrated in FIG. 23, may not be arranged in a straight line form. The plurality of electrical connection members 2201 coupled to the plurality of receptacles 1130 respectively may not be arranged in a row. Each of a plurality of boss structures 2310 may be coupled to an adjacent boss structure 2310 through a clamp member 2350. The clamp members 2350 may be disposed between the plurality of boss structures 2310. The plurality of boss structures 2310 may protrude toward the printed circuit board further than the clamp member 2350. The clamp member 2350 may face one surface of the printed circuit board. The clamp member 2350 may be formed of a conductive material or an insulation material.

FIGS. 24A, 24B and 24C are diagrams of a process of coupling a head and a receptacle according to an embodiment. Although FIGS. 24A to 24C illustrate a structure, in which an opening 2400 is formed in the printed circuit board 1120, as an example, the disclosure is not limited thereto. That is, the opening 2400 may be formed not only in the printed circuit board 1120 but in the mechanism (e.g., the mechanism 1510 of FIG. 15), and a boss structure 2410 may be inserted into the opening formed in the mechanism.

In operation S101, the electrical connection member 401 including the boss structure 2410, as illustrated in FIG. 24A, may be arranged on the printed circuit board 1120. The printed circuit board 1120 may include the opening 2400 formed in an area corresponding to the boss structure 2410. A first depth d1 that is a total depth of the opening 2400 may be less than or equal to a height hp1 of the boss structure 2410, and may be greater than or equal to a total height Hr1 of the receptacle 1130. The height hp1 of the boss structure 2410 may be greater than the total height Hr1 of the receptacle 1130. The receptacle 1130 may include the conductive side wall 1131 disposed in the base structure 1132. A height Hr2 of the conductive side wall 1131 may be less than the total height Hr1 of the receptacle 1130.

In operation S102, the head 500 on the receptacle 1130 may be arranged by, for example, using tweezers or hands of an operator. As a portion of the boss structure 2410 is inserted into the opening 2400, the head 500 of the electrical connection member 401, as illustrated in FIG. 24B, may be arranged at a proper location on the receptacle 1130. During the arrangement, the boss structure 2410 may be inserted into the opening 2400 by a second depth d2. As an example, the second depth d2 may be equal to or greater than the total height Hr1 of the receptacle 1130 according to a shape of the boss structure 2410.

In operation S103, as the boss structure 2410 is inserted into the opening 2400, a location of the head 500 is fixed, whereby the head 500 and the receptacle 1130 may be coupled to each other while the arrangement is completed. As the operator presses the head 500 toward the receptacle 1130, the head 500, as illustrated in FIG. 24C, may be coupled to the receptacle 1130. Due to the boss structure 2410, the head 500 may be coupled to the receptacle 1130 while maintaining in a horizontal state. During the coupling, the boss structure 2410, as illustrated in FIGS. 24B and 24C, may be inserted into the opening 2400 by a third depth d3 corresponding to the height Hr2 of the conductive side wall 1131 of the receptacle 1130. The boss structure 2410 may be inserted into the opening 2400 by a total sum hp2 of the second depth d2, and the third depth d3 corresponding to the height Hr2 of the conductive side wall 1131 of the receptacle 1130. The height Hr2 of the conductive side wall 1131 may be a coupling thickness of the receptacle 1130 coupled to the head 500 when the head 500 and the receptacle 1130 are coupled to each other. The boss structure 2410 may be inserted into the opening 2400 while a space corresponding to an assembly margin thickness d4 being interposed therebetween. For example, the assembly margin thickness d4 may be about 0.2 mm or less. The boss structure 2410 may be spaced apart from a bottom surface 2401 of the opening 2400 while the assembly margin thickness d4 being interposed therebetween.

An electronic device according to various embodiments disclosed herein may include devices of various forms. The electronic devices, for example, may include a portable communication device (e.g., a smart phone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to embodiments disclosed herein, because the head and the receptacle are coupled while a location of the head is fixed after the head is preliminarily arranged by using the boss structure, a stable assembly structure may be secured.

According to various embodiments of the disclosure, because the coupling of the head and the receptacle may be prevented after the operator performs a wrong arrangement operation of aligning a coupling location of the head, damage to the head and the receptacle may be prevented.

While the disclosure has been particularly shown and described with reference to embodiments thereof, it will be understood that various changes in form and details may be made therein without departing from the scope of the following claims.

## Claims

1. An electronic device (300) comprising:
a printed circuit board (1120) having a first opening (1101);
at least one receptacle (1030) provided in the printed circuit board and adjacent to the first opening;
an electrical connection member (401) comprising a head (500), wherein the electrical connection member (401) is coupled to the at least one receptacle (1030) and configured to be separable from the at least one receptacle (1030); and
at least one boss structure (600) provided in the first opening (1101) and protruding from the electrical connection member (401) toward the printed circuit board (1120),
wherein the head (500) protrudes towards the printed circuit board (1120), and
wherein the at least one boss structure (600) protrudes towards the printed circuit board (1120) further than the head protrudes towards the printed circuit board.

2. The electronic device (300) of claim 1, further comprising:
a plate structure (342) of a side member; and
a second opening (1102) formed in the plate structure,
wherein the printed circuit board (1120) is disposed on the plate structure, and
wherein the at least one boss structure (600) is provided in the first opening (1101) and the second opening (1102).

3. The electronic device (300) of claim 2, wherein the electrical connection member (401) comprises:
a cable (410) connected to the head (500), and
wherein the at least one boss structure (600) is integral with at least one of the cable (410) and the head (500), and
wherein the at least one boss structure (600) is coupled to at least one of the cable (410) and the head (500).

4. The electronic device (300) of claim 3, wherein the head (500) comprises an outer shell (530) coupled to the cable (410), and
wherein the at least one boss structure (600) is integral with at least one of the outer shell and the cable (410).

5. The electronic device (300) of claim 3, wherein the cable comprises:
an external conductor (412) connected to the head (500); and
a sheath (413) surrounding at least a portion of the external conductor, and
wherein the at least one boss structure (600) is attached to the sheath.

6. The electronic device (300) of claim 3, wherein the at least one boss structure (600) comprises at least one through-hole (610) passing through the at least one boss structure along an axial direction of the cable (410),
wherein the head (500) comprises an outer shell (530), and
wherein a partial area of the outer shell is provided in the at least one through-hole (610).

7. The electronic device (300) of claim 6, wherein an outer peripheral surface of the partial area of the outer shell (530) comprises a screw thread, and
wherein the at least one through-hole comprises a shape corresponding to the screw thread.

8. The electronic device (300) of claim 6, wherein a stopper boss (5321) is formed on an outer peripheral surface of the partial area of the outer shell, and
wherein a stopper recess (6101) coupled to the stopper boss is formed in the at least one boss structure.

9. The electronic device (300) of claim 3, wherein the at least one boss structure (600) comprises:
a first boss structure (611) provided in an area that does not overlap the cable (410); and
a second boss structure (612) provided in an area that overlaps the cable (410), the second boss structure comprising a through-hole into which the cable is provided.

10. The electronic device (300) of claim 2, wherein the at least one boss structure comprises a connection terminal contacting the plate structure.

11. The electronic device (300) of claim 2, further comprising:
a third opening (2103) formed in the plate structure, and in a direction that crosses a depth direction of the second opening; and
a fixing member (2120) protruding from the at least one boss structure and provided the third opening.

12. The electronic device (300) of claim 1, further comprising a plurality of electrical connection members (401) including the electrical connection member (401),
wherein the at least one boss structure comprises a plurality of boss structures, and
wherein one boss structure (600) of the plurality of boss structures is provided in each of the plurality of electrical connection members (401).

13. The electronic device (300) of claim 1, wherein the at least one boss structure (600) comprises a plurality of boss structures, and
wherein the electronic device (300) further comprises clamp members provided between the plurality of boss structures.

14. The electronic device (300) of claim 1, wherein at least a partial area of the at least one boss structure (600) protrudes in a direction that is inclined with respect to one surface of the printed circuit board (1120).

## Patentansprüche

1. Elektronische Vorrichtung (300), umfassend:
eine Leiterplatte (1120) mit einer ersten Öffnung (1101);
mindestens eine Aufnahme (1030), die in der Leiterplatte und benachbart zu der ersten Öffnung bereitgestellt ist;
ein elektrisches Verbindungselement (401), das einen Kopf (500) umfasst, wobei das elektrische Verbindungselement (401) an die mindestens eine Aufnahme (1030) gekoppelt ist und dazu konfiguriert ist, von der mindestens einen Aufnahme (1030) trennbar zu sein; und
mindestens eine Vorsprungstruktur (600), die in der ersten Öffnung (1101) bereitgestellt ist und von dem elektrischen Verbindungselement (401) in Richtung der Leiterplatte (1120) vorsteht,
wobei der Kopf (500) in Richtung der Leiterplatte (1120) vorsteht, und
wobei die mindestens eine Vorsprungstruktur (600) in Richtung der Leiterplatte (1120) weiter vorsteht als der Kopf in Richtung der Leiterplatte vorsteht.

2. Elektronische Vorrichtung (300) nach Anspruch 1, ferner umfassend:
eine Plattenstruktur (342) eines Seitenelements; und
eine zweite Öffnung (1102), die in der Plattenstruktur ausgebildet ist,
wobei die Leiterplatte (1120) auf der Plattenstruktur angeordnet ist und
wobei die mindestens eine Vorsprungstruktur (600) in der ersten Öffnung (1101) und der zweiten Öffnung (1102) bereitgestellt ist.

3. Elektronische Vorrichtung (300) nach Anspruch 2, wobei das elektrische Verbindungselement (401) Folgendes umfasst:
ein Kabel (410), das mit dem Kopf (500) verbunden ist, und
wobei die mindestens eine Vorsprungstruktur (600) mit mindestens einem von dem Kabel (410) und dem Kopf (500) einstückig ist, und
wobei die mindestens eine Vorsprungstruktur (600) an mindestens eines von dem Kabel (410) und dem Kopf (500) gekoppelt ist.

4. Elektronische Vorrichtung (300) nach Anspruch 3, wobei der Kopf (500) eine Außenhülle (530) umfasst, die an das Kabel (410) gekoppelt ist, und
wobei die mindestens eine Vorsprungstruktur (600) mit mindestens einem von der Außenhülle und dem Kabel (410) einstückig ist.

5. Elektronische Vorrichtung (300) nach Anspruch 3, wobei das Kabel Folgendes umfasst:
einen Außenleiter (412), der mit dem Kopf (500) verbunden ist; und
eine Umhüllung (413), die mindestens einen Abschnitt des Außenleiters umgibt, und wobei die mindestens eine Vorsprungstruktur (600) an der Umhüllung befestigt ist.

6. Elektronische Vorrichtung (300) nach Anspruch 3, wobei die mindestens eine Vorsprungstruktur (600) mindestens ein Durchgangsloch (610) umfasst, das durch die mindestens eine Vorsprungstruktur entlang einer axialen Richtung des Kabels (410) verläuft,
wobei der Kopf (500) eine Außenhülle (530) umfasst, und
wobei ein Teilbereich der Außenhülle in dem mindestens einen Durchgangsloch (610) bereitgestellt ist.

7. Elektronische Vorrichtung (300) nach Anspruch 6, wobei eine Außenumfangsfläche des Teilbereichs der Außenhülle (530) ein Schraubgewinde umfasst, und
wobei das mindestens eine Durchgangsloch eine Form umfasst, die dem Schraubengewinde entspricht.

8. Elektronische Vorrichtung (300) nach Anspruch 6, wobei ein Anschlagvorsprung (5321) an einer Außenumfangsfläche des Teilbereichs der Außenhülle ausgebildet ist, und
wobei eine Anschlagausnehmung (6101), die an den Anschlagvorsprung gekoppelt ist, in der mindestens einen Vorsprungstruktur ausgebildet ist.

9. Elektronische Vorrichtung (300) nach Anspruch 3, wobei die mindestens eine Vorsprungstruktur (600) Folgendes umfasst:
eine erste Vorsprungstruktur (611), die in einem Bereich bereitgestellt ist, der das Kabel (410) nicht überlappt; und
eine zweite Vorsprungstruktur (612), die in einem Bereich bereitgestellt ist, der das Kabel (410) überlappt, wobei die zweite Vorsprungstruktur ein Durchgangsloch umfasst, in das das Kabel bereitgestellt ist.

10. Elektronische Vorrichtung (300) nach Anspruch 2, wobei die mindestens eine Vorsprungstruktur einen Verbindungsanschluss umfasst, der die Plattenstruktur kontaktiert.

11. Elektronische Vorrichtung (300) nach Anspruch 2, ferner umfassend:
eine dritte Öffnung (2103), die in der Plattenstruktur und in einer Richtung, die eine Tiefenrichtung der zweiten Öffnung kreuzt, ausgebildet ist; und
ein Befestigungselement (2120), das von der mindestens einen Vorsprungstruktur vorsteht und die dritte Öffnung bereitstellt.

12. Elektronische Vorrichtung (300) nach Anspruch 1, ferner umfassend eine Vielzahl von elektrischen Verbindungselementen (401), die das elektrische Verbindungselement (401) beinhalten, wobei die mindestens eine Vorsprungstruktur eine Vielzahl von Vorsprungstrukturen umfasst und wobei eine Vorsprungstruktur (600) der Vielzahl von Vorsprungstrukturen in jedem der Vielzahl von elektrischen Verbindungselementen (401) bereitgestellt ist.

13. Elektronische Vorrichtung (300) nach Anspruch 1, wobei die mindestens eine Vorsprungstruktur (600) eine Vielzahl von Vorsprungstrukturen umfasst und
wobei die elektronische Vorrichtung (300) ferner Klemmelemente umfasst, die zwischen der Vielzahl von Vorsprungstrukturen bereitgestellt sind.

14. Elektronische Vorrichtung (300) nach Anspruch 1, wobei mindestens ein Teilbereich der mindestens einen Vorsprungstruktur (600) in einer Richtung vorsteht, die in Bezug auf eine Oberfläche der Leiterplatte (1120) geneigt ist.

## Revendications

1. Dispositif électronique (300) comprenant :
une carte de circuit imprimé (1120) possédant une première ouverture (1101) ;
au moins un réceptacle (1030) disposé dans la carte de circuit imprimé et adjacent à la première ouverture ;
un élément de connexion électrique (401) comprenant une tête (500), ledit élément de connexion électrique (401) étant couplé à l'au moins un réceptacle (1030) et conçu pour être séparable de l'au moins un réceptacle (1030) ; et
au moins une structure de bossage (600) disposée dans la première ouverture (1101) et faisant saillie de l'élément de connexion électrique (401) vers la carte de circuit imprimé (1120),
dans lequel la tête (500) fait saillie vers la carte de circuit imprimé (1120), et
dans lequel l'au moins une structure de bossage (600) fait saillie vers la carte de circuit imprimé (1120) davantage que la tête ne fait saillie vers la carte de circuit imprimé.

2. Dispositif électronique (300) de la revendication 1, comprenant en outre :
une structure de plaque (342) d'un élément latéral ; et
une deuxième ouverture (1102) formée dans la structure de plaque,
dans lequel la carte de circuit imprimé (1120) est disposée sur la structure de plaque, et
dans lequel l'au moins une structure de bossage (600) est disposée dans la première ouverture (1101) et la deuxième ouverture (1102).

3. Dispositif électronique (300) de la revendication 2, dans lequel l'élément de connexion électrique (401) comprend :
un câble (410) connecté à la tête (500), et
dans lequel l'au moins une structure de bossage (600) est solidaire d'au moins l'un du câble (410) et de la tête (500), et
dans lequel l'au moins une structure de bossage (600) est couplée à au moins l'un du câble (410) et de la tête (500).

4. Dispositif électronique (300) de la revendication 3, dans lequel la tête (500) comprend une coque extérieure (530) couplée au câble (410), et
dans lequel l'au moins une structure de bossage (600) est solidaire d'au moins l'un de la coque extérieure et du câble (410).

5. Dispositif électronique (300) de la revendication 3, dans lequel le câble comprend :
un conducteur externe (412) connecté à la tête (500) ; et
une gaine (413) entourant au moins une partie du conducteur externe, et
dans lequel l'au moins une structure de bossage (600) est attachée à la gaine.

6. Dispositif électronique (300) de la revendication 3, dans lequel l'au moins une structure de bossage (600) comprend au moins un trou traversant (610) traversant l'au moins une structure de bossage le long d'une direction axiale du câble (410),
dans lequel la tête (500) comprend une coque extérieure (530), et
dans lequel une zone partielle de la coque extérieure est disposée dans l'au moins un trou traversant (610).

7. Dispositif électronique (300) de la revendication 6, dans lequel une surface périphérique extérieure de la zone partielle de la coque extérieure (530) comprend un filetage cylindrique, et
dans lequel l'au moins un trou traversant comprend une forme correspondant au filetage cylindrique.

8. Dispositif électronique (300) de la revendication 6, dans lequel un bossage d'arrêt (5321) est formé sur une surface périphérique extérieure de la zone partielle de la coque extérieure, et
dans lequel un évidement d'arrêt (6101) couplé au bossage d'arrêt est formé dans l'au moins une structure de bossage.

9. Dispositif électronique (300) de la revendication 3, dans lequel l'au moins une structure de bossage (600) comprend :
une première structure de bossage (611) disposée dans une zone qui ne chevauche pas le câble (410) ; et
une seconde structure de bossage (612) disposée dans une zone qui chevauche le câble (410), la seconde structure de bossage comprenant un trou traversant dans lequel le câble est disposé.

10. Dispositif électronique (300) de la revendication 2, dans lequel l'au moins une structure de bossage comprend une borne de connexion en contact avec la structure de plaque.

11. Dispositif électronique (300) de la revendication 2, comprenant en outre :
une troisième ouverture (2103) formée dans la structure de plaque, et dans une direction qui croise une direction de profondeur de la deuxième ouverture ; et
un élément de fixation (2120) faisant saillie de l'au moins une structure de bossage et disposé dans la troisième ouverture.

12. Dispositif électronique (300) de la revendication 1, comprenant en outre une pluralité d'éléments de connexion électrique (401) comprenant l'élément de connexion électrique (401),
dans lequel l'au moins une structure de bossage comprend une pluralité de structures de bossage, et
dans lequel une structure de bossage (600) de la pluralité de structures de bossage est disposée dans chacun de la pluralité d'éléments de connexion électrique (401).

13. Dispositif électronique (300) de la revendication 1, dans lequel l'au moins une structure de bossage (600) comprend une pluralité de structures de bossage, et
dans lequel le dispositif électronique (300) comprend en outre des éléments de serrage disposés entre la pluralité de structures de bossage.

14. Dispositif électronique (300) de la revendication 1, dans lequel au moins une zone partielle de l'au moins une structure de bossage (600) fait saillie dans une direction qui est inclinée par rapport à une surface de la carte de circuit imprimé (1120).
